# EUROPEAN PATENT APPLICATION

(11) **EP 4 738 955 A1**
(43) Date of publication of application: **06.05.2026**
(21) Application number: 23942912.9
(22) Date of filing: 29.06.2023
(51) Int. Cl.: H04W 72/0446

(54) **RESOURCE RESELECTION METHOD AND APPARATUS**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2023/104293
(87) International publication number: WO 2025/000404

(57) **Abstract**

Embodiments of the present disclosure disclose a resource reselection method and apparatus, which can be applied in Internet of Vehicles, V2X, V2V, and like systems. The method comprises: in response to listen before talk (LBT) failure occurring on a first time slot resource among multi-continuous time slot transmission resources, a terminal device triggers resource reselection for the multi-continuous time slot transmission resources. The multi-continuous time slot transmission resources comprise multiple continuous time slot transmission resources and are used for transmission of multiple transmission blocks (TBs). By means of implementing the embodiments of the present disclosure, the influence of LBT on communication quality can be reduced, and a solution can be provided for LBT in multi-continuous time slot transmission, if failure occurs.

## Description

### FIELD

The present disclosure relates to the field of communication technology, and in particular to a resource reselection method and apparatus.

### BACKGROUND

Sidelink (SL) communication may use unlicensed spectrum (also called shared frequency band). A terminal device also needs to listen to talk (LBT) when sending SL data on unlicensed spectrum. The consecutive LBT failure mechanism is also applicable to the SL communication on the unlicensed spectrum. A multiple consecutive slot transmission (MCSt) reduces the influence of the LBT on communication quality by transmitting over multiple consecutive slots. The terminal device may successfully perform the LBT once and transmit over the multiple consecutive slots. However, there is currently a lack of effective means to solve how to handle the LBT failure of the multiple consecutive slot transmission.

### SUMMARY

Embodiments of the present disclosure provide a resource reselection method and apparatus.

According to a first aspect of embodiments of the present disclosure, there is provided a resource reselection method, which includes:
triggering a resource reselection for a multiple consecutive slot transmission resource in response to a listen before talk (LBT) failure occurring on a first slot resource within the multiple consecutive slot transmission resource, in which the multiple consecutive slot transmission resource includes a plurality of consecutive slot resources for transmitting a plurality of transport blocks (TBs).

According to a second aspect of embodiments of the present disclosure, there is provided a resource reselection apparatus, which includes:
a processing module configured to trigger a resource reselection for a multiple consecutive slot transmission resource in response to a listen before talk (LBT) failure occurring on a first slot resource within the multiple consecutive slot transmission resource, in which the multiple consecutive slot transmission resource includes a plurality of consecutive slot resources for transmitting a plurality of transport blocks (TBs).

According to a third aspect of embodiments of the present disclosure, there is provided a terminal device, which includes:
one or more processors,
in which the processor is configured to invoke instructions to cause the terminal device to perform the resource reselection method of the first aspect.

According to a fourth aspect of embodiments of the present disclosure, there is provided a storage medium storing instructions that, when executed by a terminal device, cause the terminal device to perform the resource reselection method of the first aspect.

According to the technical solution of the present disclosure, the influence of LBT on communication quality may be reduced, and a solution may be provided if the LBT for the multiple consecutive slot transmission fails.

### BRIEF DESCRIPTION OF THE DRAWINGS

In order to more clearly explain the technical solutions in embodiments of the present disclosure, the accompanying drawings necessary for the description of the embodiments are described below, and the following drawings are only some embodiments of the present disclosure, and do not specifically limit the scope of protection of the present disclosure.
FIG. 1 is a flow chart of a resource reselection method provided by an embodiment of the present disclosure.
FIG. 2 is an example diagram of multiple consecutive slot transmission resources for transmitting three identical TB1 provided by an embodiment of the present disclosure.
FIG. 3 is a first example diagram of multiple consecutive slot transmission resources for transmitting four different TB1 provided by an embodiment of the present disclosure.
FIG. 4 is a second example diagram of multiple consecutive slot transmission resources for transmitting four different TB1 provided by an embodiment of the present disclosure.
FIG. 5 is a block diagram of a communication apparatus provided by an embodiment of the present disclosure.
FIG. 6 is a block diagram of a terminal device 600 provided by an embodiment of the present disclosure.
FIG. 7 is a block diagram of a chip 700 provided by an embodiment of the present disclosure.

### DETAILED DESCRIPTION OF THE DISCLOSURE

Embodiments of the present disclosure provide a resource reselection method and apparatus.

According to a first aspect, embodiments of the present disclosure provide a resource reselection method, and the method includes:
triggering a resource reselection for a multiple consecutive slot transmission resource in response to a listen before talk (LBT) failure occurring on a first slot resource within the multiple consecutive slot transmission resource, in which the multiple consecutive slot transmission resource includes a plurality of consecutive slot resources for transmitting a plurality of transport blocks (TBs).

In above embodiments, in a case where the LBT on the multiple consecutive slot transmission resource fails, the terminal device triggers the resource reselection for the multiple consecutive slot transmission resource, which may provide a solution if the LBT for the multiple consecutive slot transmission fails, and may reduce the influence of the LBT on the communication quality.

In conjunction with some embodiments of the first aspect, it may start from the first slot resource within the multiple consecutive slot transmission resource. In other embodiments of the present disclosure, it may also start from other slot resources satisfying a condition within the multiple consecutive slot transmission resource.

Embodiments of the present disclosure further provide a resource reselection method, and the method includes:
triggering a resource reselection for a multiple consecutive slot transmission resource in response to a listen before talk (LBT) failure occurring on a first slot resource within the multiple consecutive slot transmission resource. In an embodiment of the present disclosure, the multiple consecutive slot transmission resource may include a plurality of consecutive slot resources. In above embodiments, once the LBT failure occurs, the resource reselection is started to be triggered, so that the influence of the LBT on the communication quality may be reduced.

In above embodiments, in a case where the plurality of transport block (TBs) are the same TB, the resource reselection for the multiple consecutive slot transmission resource may be performed by using a preset parameter acquired from the physical layer, or the resource reselection for the multiple consecutive slot transmission resource may be performed by using a candidate resource set acquired from the physical layer. Of course, in other embodiments of the present disclosure, other approaches may also be selected for the resource reselection. In an embodiment of the present disclosure, the physical layer may acquire the parameter through a media access control (MAC) layer, or may acquire the parameter through other approaches.

The following provides specific embodiments for performing the resource reselection. In some embodiments, the reselection may be performed according to the preset parameter. In other embodiments, the reselection may be performed according to the candidate resource set. In still other embodiments, the resource reselection may be performed through other approaches. It should be noted that these embodiments may be implemented independently or in combination, provided that the objective of the resource reselection is achieved.

In conjunction with some embodiments of the first aspect, in some embodiments, the plurality of TBs are the same TB; and triggering the resource reselection for the multiple consecutive slot transmission resource includes at least one of:
a medium access control (MAC) layer of the terminal device submitting a first parameter to a physical layer (PHY) of the terminal device, in which the first parameter is used for the resource reselection for the multiple consecutive slot transmission resource; or
acquiring a first candidate resource set for the TB from the physical layer, in which a resource in the first candidate resource set is a single slot resource; and selecting the multiple consecutive slot transmission resource for the TB in the first candidate resource set, in which the multiple consecutive slot transmission resource selected includes an initial transmission resource and a retransmission resource of the TB.

In above embodiments, in a case where the LBT for the multiple consecutive slot transmission of a single TB fails, the multiple consecutive slot transmission resource may be directly reselected, that is, the first parameter is submitted to the physical layer of the terminal device by the MAC layer of the terminal device, the physical layer provides the TB with the first candidate resource set, and the resource in the first candidate resource set is the single slot resource. The MAC layer selects the multiple consecutive slot transmission resource for the plurality of TBs from the first candidate resource set, which may avoid an increase in time cost caused by sequentially trying to perform the LBT on the remaining multiple consecutive slot transmission resources, improving efficiency and reducing the influence of the LBT on the communication quality.

In conjunction with some embodiments of the first aspect, in some embodiments, the plurality of TBs are the same TB; and triggering the resource reselection for the multiple consecutive slot transmission resource includes at least one of:
an MAC layer of the terminal device submitting a second parameter to a physical layer of the terminal device, in which the second parameter is used for the resource reselection for the multiple consecutive slot transmission resource; or
acquiring a second candidate resource set for the TB from the physical layer, in which a resource in the second candidate resource set is a multiple consecutive slot resource; and selecting the multiple consecutive slot transmission resource for the TB in the second candidate resource set, in which the multiple consecutive slot transmission resource selected includes a multiple consecutive slot initial transmission resource and a multiple consecutive slot retransmission resource of the TB.

In above embodiments, in a case where the LBT for the multiple consecutive slot transmission of a single TB fails, the multiple consecutive slot transmission resource may be directly reselected, that is, the second parameter is submitted to the physical layer of the terminal device by the MAC layer of the terminal device, the physical layer provides the TB with a second candidate resource set, and the resource in the second candidate resource set is the multiple consecutive slot resource. The MAC layer selects the multiple consecutive slot transmission resource for the plurality of TBs from the second candidate resource set, which may avoid an increase in time cost caused by sequentially trying to perform the LBT on the remaining multiple consecutive slot transmission resources, improving efficiency and reducing the influence of the LBT on the communication quality.

In above embodiments, triggering the resource reselection for the multiple consecutive slot transmission resource in response to satisfying a first reselection condition after the LBT failure occurs on the first slot resource; or continuing to perform the LBT on other slot resources in response to not satisfying the first reselection condition after the LBT failure occurs on the first slot resource. In an embodiment of the present disclosure, if the LBT still fails after continuing on other slot resources, it continues to determine whether the first reselection condition is satisfied, and proceeds to perform the LBT on the remaining slot resources sequentially until the first reselection condition is satisfied. In an embodiment of the present disclosure, the first reselection condition includes a number of available consecutive slots within the multiple consecutive slot transmission resource being less than or equal to a first threshold, or the LBT failure occurring on all slot resources within the multiple consecutive slot transmission resource. In embodiments of the present disclosure, the determination of the first reselection condition may be performed after the LBT failure occurs on the slot resource, and the reselection may be performed after the first reselection condition is satisfied, improving the reselection efficiency.

In above embodiments, the LBT is performed on the other slot resources within the multiple consecutive slot transmission resource according to a first order, and in response to satisfying the first reselection condition, the resource reselection for the multiple consecutive slot transmission resource is triggered. In an embodiment of the present disclosure, the first reselection condition includes a number of available consecutive slots within the multiple consecutive slot transmission resource being less than or equal to a first threshold, or the LBT failure occurring on all slot resources within the multiple consecutive slot transmission resource. In embodiments of the present disclosure, the first order may be a preset order, for example, according to a chronological order of the slot resources. In above embodiments, the LBT may be performed in a preset order of slot resources, improving the reselection efficiency and reducing the influence of the LBT.

In above embodiments, the plurality of TBs are a plurality of identical TBs, and triggering the resource reselection for the multiple consecutive slot transmission resource includes: continuing to perform the LBT on a next slot resource until a first reselection condition is satisfied, in which the next slot resource is a slot resource adjacent to a previous slot resource on which the LBT failure occurred within the multiple consecutive slot transmission resource; and triggering the resource reselection for the multiple consecutive slot transmission resource. In above embodiments, in a case where the plurality of TBs are identical TBs, the LBT may be sequentially performed in the order of slot resources until the first reselection condition is satisfied, improving the reselection efficiency and reducing the influence of the LBT.

In above embodiments, the plurality of TBs are the same TB; and triggering the resource reselection for the multiple consecutive slot transmission resource includes: triggering the resource reselection for the multiple consecutive slot transmission resource in response to satisfying a first reselection condition after the LBT failure occurs on the first slot resource; or continuing to perform the LBT on a second slot resource within the multiple consecutive slot transmission resource in response to not satisfying a first reselection condition, and determining whether to trigger the resource reselection for the multiple consecutive slot transmission resource according to the first reselection condition. In embodiments of the present disclosure, if the LBT failure occurs on the first slot resource, it is determined whether the first reselection condition is satisfied. If satisfied, the reselection is performed; if not, the LBT continues to be performed on a second slot resource, after which it is again determined whether the first reselection condition is satisfied. In an embodiment of the present disclosure, the first reselection condition includes a number of available consecutive slots within the multiple consecutive slot transmission resource being less than or equal to a first threshold, or the LBT failure occurring on all slot resources within the multiple consecutive slot transmission resource.

In conjunction with some embodiments of the first aspect, in some embodiments, the plurality of TBs are the same TB; and triggering the resource reselection for the multiple consecutive slot transmission resource includes:
in a case where the LBT failure occurs on the first slot resource but the first reselection condition is not satisfied, continuing to perform the LBT on a next slot resource until the first reselection condition is satisfied, in which the next slot resource is a slot resource adjacent to a previous slot resource on which the LBT failure occurred within the multiple consecutive slot transmission resource; and
triggering the resource reselection for the multiple consecutive slot transmission resource in response to satisfying the first reselection condition; in which the first reselection condition includes a number of available consecutive slots within the multiple consecutive slot transmission resource being less than or equal to a first threshold, or the LBT failure occurring on all slot resources within the multiple consecutive slot transmission resource.

In above embodiments, in a case where the LBT for the multiple consecutive slot transmission of a single TB fails, the resource reselection for the multiple consecutive slot transmission resource is not triggered, for example, the terminal device may continue to perform the LBT on the next slot resource until the first reselection condition is satisfied, for example, the number of the available consecutive slots within the multiple consecutive slot transmission resource is less than or equal to the first threshold, or the LBT failure occurs on all slot resources within the consecutive slot transmission resource, saving resources, avoiding resource waste, and reducing the triggering times of the resource reselection.

In conjunction with some embodiments of the first aspect, in some embodiments, the plurality of TBs are a plurality of different TBs; and triggering the resource reselection for the multiple consecutive slot transmission resource includes:

for each of the plurality of different TBs, triggering the resource reselection for the multiple consecutive slot transmission resource.

In above embodiments, in a case where the LBT for the multiple consecutive slot transmission of the plurality of TBs fails, the resource reselection may be directly triggered, avoiding an increase in time cost caused by sequentially trying to perform the LBT on the remaining multiple consecutive slot transmission resources, improving efficiency and reducing the influence of the LBT on the communication quality.

In conjunction with some embodiments of the first aspect, in some embodiments, for each of the plurality of different TBs, triggering the resource reselection for the multiple consecutive slot transmission resource includes at least one of:
an MAC layer of the terminal device submitting a first parameter corresponding to each TB to a physical layer of the terminal device, in which the first parameter corresponding to each TB is used for the resource reselection for the corresponding TB;
acquiring, from the physical layer, a third candidate resource set corresponding to each TB, in which a resource in the third candidate resource set is a single slot resource; or
performing resource selection or reselection in the third candidate resource set corresponding to each TB to determine the multiple consecutive slot transmission resource for the plurality of different TBs, in which a resource selected includes an initial transmission resource and a retransmission resource of each TB.

In above embodiments, the MAC layer of the terminal device may trigger independent resource selection/reselection for each TB of the plurality of different TBs, and submit the first parameter to the physical layer of the terminal device for each TB. The physical layer provides the third candidate resource set for each TB, and the resource in the third candidate resource set is the single slot resource. The MAC layer performs the resource selection/reselection in the third candidate resource set corresponding to each TB, and the resources selected are consecutive in slots, so that the multiple consecutive slot transmission resource for the plurality of different TBs may be acquired, and the resource reselection for the multiple consecutive slot transmission resource may be realized, avoiding an increase in time cost caused by sequentially trying to perform the LBT on the remaining multiple consecutive slot transmission resources, improving efficiency and reducing the influence of the LBT on the communication quality.

In conjunction with some embodiments of the first aspect, in some embodiments, for each of the plurality of different TBs, triggering the resource reselection for the multiple consecutive slot transmission resource includes at least one of:
an MAC layer of the terminal device submitting a second parameter corresponding to each TB to a physical layer of the terminal device, in which the second parameter corresponding to each TB is used for the resource reselection for the corresponding TB;
acquiring, from the physical layer, a fourth candidate resource set corresponding to each TB, in which a resource in the fourth candidate resource set is a multiple consecutive slot resource; or
performing resource selection or reselection in the fourth candidate resource set corresponding to each TB to determine the multiple consecutive slot transmission resource for the plurality of different TBs, in which an selected resource includes a multiple consecutive slot initial transmission resource and a multiple consecutive slot retransmission resource of each TB.

In the above-described embodiment, the MAC layer of the terminal device may trigger independent resource selection/reselection for each TB of the plurality of different TBs, and submit the second parameter to the physical layer of the terminal device for each TB. The physical layer provides the fourth candidate resource set for each TB, and the resource in the fourth candidate resource set is the consecutive slot resource. The MAC layer performs the resource selection/reselection in the fourth candidate resource set corresponding to each TB, so that the multiple consecutive slot transmission resource for the plurality of different TBs may be acquired, and the resource reselection for the multiple consecutive slot transmission resource may be realized, avoiding an increase in time cost caused by sequentially trying to perform the LBT on the remaining multiple consecutive slot transmission resources, improving efficiency and reducing the influence of the LBT on the communication quality.

In conjunction with some embodiments of the first aspect, in some embodiments, the plurality of TBs are a plurality of different TBs; and triggering the resource reselection for the multiple consecutive slot transmission resource includes at least one of:
an MAC layer of the terminal device submitting a second parameter corresponding to the plurality of TBs to a physical layer of the terminal device, in which the second parameter corresponding to the plurality of TBs is used for the resource reselection for the plurality of different TBs;
acquiring, from the physical layer, a fifth candidate resource set corresponding to the plurality of different TBs, wherein a resource in the fifth candidate resource set is a multiple consecutive slot resource; or
selecting the multiple consecutive slot transmission resource for the plurality of different TBs in the fifth candidate resource set, wherein the multiple consecutive slot transmission resource selected includes a multiple consecutive slot initial transmission resource and a multiple consecutive slot retransmission resource of the plurality of different TBs.

In above embodiments, the MAC layer of the terminal device triggers the resource selection/reselection only once for the plurality of different TBs, and transmits the second parameter to the physical layer of the terminal device for the plurality of TBs. The physical layer provides the fifth candidate resource set for the plurality of TBs through the second parameter, and the resource in the fifth candidate resource set is the consecutive slot resource. The MAC layer selects the multiple consecutive slot transmission resource for the plurality of TBs from the fifth candidate resource set, avoiding an increase in time cost caused by sequentially trying to perform the LBT on the remaining multiple consecutive slot transmission resources, improving efficiency and reducing the influence of the LBT on the communication quality.

In conjunction with some embodiments of the first aspect, in some embodiments, the plurality of TBs are a plurality of different TBs; and triggering the resource reselection for the multiple consecutive slot transmission resource includes:
in a case where the LBT failure occurs on the first slot resource but the second reselection condition is not satisfied, continuing to perform the LBT on a first slot resource within a next consecutive slot transmission resource until the second reselection condition is satisfied, for example, the number of available multiple consecutive slot transmission resources being less than or equal to a first threshold, or the LBT failure occurring on the first slot resource within all multiple consecutive slot transmission resources; in which the next multiple consecutive slot transmission resource is a next multiple consecutive slot transmission resource adjacent to a previous multiple consecutive slot transmission resource on which the LBT failure occurred, for transmitting the plurality of different TBs; and
triggering the resource reselection for the multiple consecutive slot transmission resource in response to satisfying a second reselection condition.

In above embodiments, in a case where the LBT for the multiple consecutive slot transmission of the plurality of TBs fails, the resource reselection for the multiple consecutive slot transmission resource is not triggered, for example, the terminal device may continue to perform the LBT on the first slot resource within the next multiple consecutive slot transmission resource until the second reselection condition is satisfied, for example, the number of the available multiple consecutive slot transmission resources is less than or equal to the first threshold, or the LBT failure occurs on the first slot resource within all consecutive slot transmission resources, and then the terminal device triggers the resource reselection for the multiple consecutive slot transmission resource, saving resources, avoiding resource waste, and reducing the triggering times of the resource reselection.

In conjunction with some embodiments of the first aspect, in some embodiments, the first parameter includes at least one of:
a remaining package delay budget (PDB);
a number of subchannels *L*_{subCH} for a physical sidelink shared channel (PSSCH) transmission in one subframe;
a resource reservation interval *P*_{rsvp_TX} for a PSSCH transmission; or
priority information *prio_{TX}* for a PSSCH transmission.

In above embodiments, the MAC layer of the terminal device submits at least one parameter such as the remaining PDB, *L*_{subCH}, *P*_{rsvp_TX}, and *prio_{TX},* so that the physical layer may provide a corresponding candidate resource set through the set of parameters, and the MAC layer may facilitate resource selection/reselection from the candidate resource set, ensuring communication quality.

In conjunction with some embodiments of the first aspect, in some embodiments, the second parameter includes at least one of:
a remaining PDB;
a number of subchannels L_"subCH" for a PSSCH transmission in one subframe;
a resource reservation interval P_"rsvp_TX" for a PSSCH transmission;
priority information prio_TX for a PSSCH transmission; or
a number of slots for a multiple consecutive slot transmission.

In above embodiments, the MAC layer of the terminal device may submit at least one parameter such as the remaining PDB, *L*_{subCH}, *P*_{rsvp_TX}, and *prio_{TX}* to the physical layer of the terminal device, and the MAC layer may also submit a parameter of "number of slots for the multiple consecutive slot transmission" to the physical layer, so that the physical layer may provide a corresponding candidate resource set through the parameter of "number of slots for the multiple consecutive slot transmission", and the resource in the candidate resource set is the multiple consecutive slot resource, ensuring communication quality and reducing the influence of the LBT on communication quality.

In conjunction with some embodiments of the first aspect, in some embodiments, the method further includes:
determining the first threshold by the MAC layer of the terminal device.

In above embodiments, the terminal device may determine the first threshold according to the implementation, and it is convenient for the terminal device to limit the number of times the terminal device sequentially tries to perform the LBT on the remaining multiple consecutive slot transmission resources based on the first threshold. In addition, when the first threshold is determined by the terminal device, there is no need for network-side configuration, and signaling overhead may be saved, saving resources and avoiding resource waste.

In conjunction with some embodiments of the first aspect, in some embodiments, the first threshold is N times the number of slots for the multiple consecutive slot transmission, in which 0 < N ≤ 1.

In above embodiments, it is convenient for the terminal device to limit the number of times the terminal device sequentially tries to perform the LBT on the remaining multiple consecutive slot transmission resources based on the first threshold.

According to a second aspect, embodiments of the present disclosure provide a resource reselection apparatus, and the apparatus includes: at least one of a transceiver module and a processing module; in which the resource reselection apparatus is configured to perform an optional implementation of the first aspect. The processing module is configured to trigger a resource reselection for a multiple consecutive slot transmission resource in response to a listen before talk (LBT) failure occurring on a first slot resource within the multiple consecutive slot transmission resource, in which the multiple consecutive slot transmission resource includes a plurality of consecutive slot resources for transmitting a plurality of TBs.

In conjunction with some embodiments of the second aspect, in some embodiments, the plurality of TBs are the same TB, and the processing module is specifically configured to submit a first parameter by the MAC layer of the terminal device to a physical layer (PHY) of the terminal device, in which the first parameter is used for the resource reselection for the multiple consecutive slot transmission resource; acquire a first candidate resource set for the TB from the physical layer, in which a resource in the first candidate resource set is a single slot resource; and select the multiple consecutive slot transmission resource for the TB in the first candidate resource set, in which the multiple consecutive slot transmission resource selected includes an initial transmission resource and a retransmission resource of the TB.

In conjunction with some embodiments of the second aspect, in some embodiments, the plurality of TBs are the same TB, and the processing module is specifically configured to submit a second parameter by the MAC layer of the terminal device to a physical layer of the terminal device, in which the second parameter is used for the resource reselection for the multiple consecutive slot transmission resource; acquire a second candidate resource set for the TB from the physical layer, in which a resource in the second candidate resource set is a multiple consecutive slot resource; and select the multiple consecutive slot transmission resource for the TB in the second candidate resource set, in which the multiple consecutive slot transmission resource selected includes a multiple consecutive slot initial transmission resource and a multiple consecutive slot retransmission resource of the TB.

In conjunction with some embodiments of the second aspect, in some embodiments, the plurality of TBs are the same TB; and the processing module is further configured to: in a case where the LBT failure occurs on the first slot resource but the first reselection condition is not satisfied, continue to perform the LBT on a next slot resource until the first reselection condition is satisfied, for example, the number of consecutive slots within the multiple consecutive slot transmission resource being less than or equal to a first threshold, or the LBT failure occurring on all slot resources within the multiple consecutive slot transmission resource, in which the next slot resource is a slot resource adjacent to a previous slot resource on which the LBT failure occurred within the multiple consecutive slot transmission resource; and trigger a resource reselection for the multiple consecutive slot transmission resource in response to satisfying a trigger condition.

In conjunction with some embodiments of the second aspect, in some embodiments, the plurality of different TBs are a plurality of different TBs; and the processing module is specifically configured to trigger the resource reselection for the multiple consecutive slot transmission resource for each of the plurality of different TBs.

In conjunction with some embodiments of the second aspect, in some embodiments, the processing module is specifically configured to: submit a first parameter corresponding to each TB by the MAC layer of the terminal device to a physical layer of the terminal device, in which the first parameter corresponding to each TB is used for the resource reselection for the corresponding TB; acquire, from the physical layer, a third candidate resource set corresponding to each TB, in which a resource in the third candidate resource set is a single slot resource; perform resource selection or reselection in the third candidate resource set corresponding to each TB to determine the multiple consecutive slot transmission resource for the plurality of different TBs, in which a resource selected includes an initial transmission resource and a retransmission resource of each TB.

In conjunction with some embodiments of the second aspect, in some embodiments, the processing module is specifically configured to: submit a second parameter corresponding to each TB by the MAC layer of the terminal device to a physical layer of the terminal device, in which the second parameter corresponding to each TB is used for the resource reselection for the corresponding TB; acquire, from the physical layer, a fourth candidate resource set corresponding to each TB, in which a resource in the fourth candidate resource set is a multiple consecutive slot resource; perform resource selection or reselection in the fourth candidate resource set corresponding to each TB to determine the multiple consecutive slot transmission resource for the plurality of different TBs, in which a resource selected includes a multiple consecutive slot initial transmission resource and a multiple consecutive slot retransmission resource of each TB.

In conjunction with some embodiments of the second aspect, in some embodiments, the plurality of TBs are a plurality of different TBs, and the processing module is specifically configured to submit a second parameter corresponding to the plurality of different TBs by the MAC layer of the terminal device to the physical layer of the terminal device, in which the second parameter corresponding to the plurality of TBs is used for the resource reselection for the plurality of different TBs; acquire, from a physical layer, a fifth candidate resource set for the plurality of TBs, in which a resource in the fifth candidate resource set is a multiple consecutive slot resource; and select the multiple consecutive slot transmission resource for the plurality of different TB in the fifth candidate resource set, in which the multiple consecutive slot transmission resource selected includes a multiple consecutive slot initial transmission resource and a multiple consecutive slot retransmission resource of the plurality of TBs.

In conjunction with some embodiments of the second aspect, in some embodiments, the plurality of TBs are a plurality of different TBs, and the processing module is specifically configured to continue to perform the LBT on the first slot resource within the next multiple consecutive slot transmission resource until the second reselection condition is satisfied, for example, the number of the available multiple consecutive slot transmission resources being less than or equal to the first threshold, or the LBT failure occurring on the first slot resource within all consecutive slot transmission resources, in which the next multiple consecutive slot transmission resource is a next multiple consecutive slot transmission resource adjacent to a previous multiple consecutive slot transmission resource on which the LBT failure occurred, for transmitting the plurality of different TBs; and trigger the resource reselection for the multiple consecutive slot transmission resource in response to satisfying a second reselection condition.

In conjunction with some embodiments of the second aspect, in some embodiments, the first parameter includes at least one of:
a remaining package delay budget (PDB);
a number of subchannels *L*_{subCH} for a physical sidelink shared channel (PSSCH) transmission in one subframe;
a resource reservation interval *P*_{rsvp_TX} for a PSSCH transmission; or
priority information *prio_{TX}* for a PSSCH transmission.

In conjunction with some embodiments of the second aspect, in some embodiments, the second parameter includes at least one of:
a remaining PDB;
a number of subchannels L_"subCH" for a PSSCH transmission in one subframe;
a resource reservation interval P_"rsvp_TX" for a PSSCH transmission;
priority information prio_TX for a PSSCH transmission; or
a number of slots for a multiple consecutive slot transmission.

In conjunction with some embodiments of the second aspect, in some embodiments, the processing module is further configured to determine the first threshold by the MAC layer of the terminal device.

In conjunction with some embodiments of the second aspect, in some embodiments, the first threshold is N times the number of slots for the multiple consecutive slot transmission, in which 0 < N ≤ 1.

According to a third aspect, embodiments of the present disclosure provide a terminal device. The terminal device includes: one or more processors, in which the terminal device is configured to perform optional implementations of the first aspect.

According to a fourth aspect, embodiments of the present disclosure provide a storage medium storing instructions that, when executed by a terminal device, cause the terminal device to perform the optional implementations of the first aspect.

According to a fifth aspect, embodiments of the present disclosure provide a program product that, when executed by a terminal device, causes the terminal device to perform a method as described in optional implementations of the first aspect.

According to a sixth aspect, embodiments of the present disclosure provide a computer program that, when executed on a computer, causes the computer to perform a method as described in optional implementations of the first aspect.

According to a seventh aspect, embodiments of the present disclosure provide a chip or a chip system. The chip or chip system includes a processing circuit configured to perform the method as described in optional implementations of the first aspect.

According to an eighth aspect, embodiments of the present disclosure provide a resource reselection system, and the system includes the terminal device and other network-side devices.

It may be understood that the terminal device, the storage medium, the program product, the computer program, the chip or the chip system described above are all used to perform the method provided by embodiments of the present disclosure. Therefore, for the beneficial effects that may be achieved, reference may be made to the beneficial effects in the corresponding methods, which are not repeated here.

Embodiments of the present disclosure provide a resource reselection method and apparatus. In some embodiments, terms such as the resource reselection method, the information processing method, and the communication method may be interchanged with each other, terms such as the resource reselection apparatus, the information processing apparatus, and the communication apparatus may be interchanged with each other, and terms such as the information processing system, and the communication system may be interchanged with each other.

The embodiments of the present disclosure are not exhaustive, but are merely illustrative of some embodiments, and are not intended to be a specific limitation on the scope of protection of the present disclosure. Unless there is no contradiction, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and in addition, optional implementations in a certain embodiment may be arbitrarily combined. In addition, various embodiments may be arbitrarily combined, for example, some or all steps of different embodiments may be arbitrarily combined, and one embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are only for purpose of description of particular embodiments, and are not intended to limit embodiments of the present disclosure.

In embodiments of the present disclosure, unless otherwise specified, an element represented in the singular form, such as "a", "an", "the", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, the term "plurality of" refers to two or more than two.

In some embodiments, terms such as "at least one of," "one or more," "a plurality of," and "multiple" may be interchanged with each other.

In some embodiments, descriptions such as "at least one of A and B", "A and/or B", "A in one case, B in another case", "in response to one case A, in response to another case B", etc. may include the following technical solutions according to circumstances: in some embodiments, A (performing A independently of B); in some embodiments, B (performing B independently of A); in some embodiments, select from A and B for performing (A and B are selectively performed); in some embodiments, A and B (both A and B are performed). It is similar to the above when there are more branches such as A, B, C, etc.

In some embodiments, descriptions such as "A or B" may include the following technical solutions according to circumstances: in some embodiments, A (performing A independently of B); in some embodiments, B (performing B independently of A); in some embodiments, select from A and B for performing (A and B are selectively performed). It is similar to the above when there are more branches such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types may be the same or different. For another example, when the description object is "information", the "first information" and the "second information" may be the same information or different information, and the contents may be the same or different.

In some embodiments, "including A," "comprising A," "for indicating A," "carrying A," may be interpreted as directly carrying A, or may be interpreted as indirectly indicating A.

In some embodiments, terms such as "in response to," "in response to determining," "in a case where," "upon," "when," "if," "in case," and the like may be interchangeable with each other.

In some embodiments, terms such as "greater than", "greater than or equal to", "not smaller than", "more than", "more than or equal to", "not less than", "higher than", "higher than or equal to", "not lower than", "above" and the like may be interchanged with each other, and terms such as "smaller than", "smaller than or equal to", "not greater than", "less than", "less than or equal to", "not more than", "lower than", "lower than or equal to", "not higher than", "below" and the like may be interchanged with each other.

In some embodiments, a device and an apparatus or the like may be interpreted as either physical or virtual, and the name thereof is not limited to the name described in the embodiments, and in some cases may also be understood as "equipment", "device", "circuit", "network element", "node", "function", "unit", "section", "system", "network", "chip", "chip system", "entity", and "body" or the like.

In some embodiments, a "network" may be interpreted as an apparatus (e.g., an access network device, a core network device, etc.) included in the network.

In some embodiments, "access network device (AN device)" may also be referred to as "radio access network device (RAN device)", "base station (BS)", "radio base station", "fixed station", and in some embodiments may also be referred to as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, "terminal" or "terminal device" may be referred to as "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or the like.

In some embodiments, the acquisition of data, information, etc. may comply with laws and regulations of the country where it is located.

In some embodiments, data, information, etc. may be obtained after acquiring the user's consent.

In addition, each element, each row, or each column in the table of embodiments of the present disclosure may be implemented as an independent embodiment, and any combination of any element, any row, or any column may also be implemented as an independent embodiment.

It should be noted that the terminal device mentioned in embodiments of the present disclosure includes, for example, at least one of a mobile phone, a wearable device, an Internet of Things device, an automobile with a communication function, a smart car, a tablet computer, a computer with a wireless transmission and reception function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, and a wireless terminal device in a smart home, which is not limited to this.

Each embodiment of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new Radio (NR), future radio access (FRA), new-radio access technology (RAT), new radio (NR), new radio access (NX), future generation radio access (FX), global system for mobile communications (GSM (registered trademark) ), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X) system, systems using other communication methods, next generation systems extended based on them, and the like. In addition, a plurality of systems may be applied in combination (for example, a combination of LTE or LTE-A and 5G, or the like).

For ease of understanding, the terms involved in the present disclosure are first introduced.

### 1. Sidelink (SL)

A link for direct communication between the terminal device and the terminal device, and an interface between the terminal device and the terminal device is PC-5. According to a correspondence relationship between transmitting and receiving terminals, three transmission modes are supported on the sidelink: unicast, multicast and broadcast. The transmitting terminal transmits sidelink control information (SCI) on a physical sidelink control channel (PSCCH) and transmits a second stage SCI on a physical sidelink shared channel (PSSCH), which carries resource locations, source and destination identifiers, and the like for transmitting data. For data packets enabled by hybrid automatic repeat request (HARQ) feedback, the receiving terminal performs hybrid automatic repeat request-acknowledgement (HARQ-ACK) feedback for the PSSCH on a physical sidelink feedback channel (PSFCH).

### 2. Listen Before Talk (LBT)

The LBT is a widely used technology in radio communication. Before starting transmission, a wireless device or a base station first listens to its radio environment, "senses" the communication channel to detect whether the channel is idle, and if the channel is busy, waits until it becomes idle before transmission, avoiding channel access collisions and enabling channel spectrum sharing.

The LBT type contains type 1 and type 2. The LBT of type 1 is based on the contention window, and the duration of channel monitoring is determined by a random number. It is not considered an access channel until the random number is equal to 0 and the channel is idle; and the LBT of type 2 is based on a fixed-time monitoring channel, such as 25us, 16us, etc.

### 3. Channel access priority class (CAPC)

The CAPC is a parameter related to LBT. Different CAPCs affect the priority in channel contention. A smaller CAPC value indicates a higher priority. The terminal device may determine the CAPC of a medium access control (MAC) protocol data unit (PDU).

### 4. Logical channel priority (LCP)

The multiplexing function of the transmitting MAC layer loads the data of multiple logical channels into a transmission channel, that is, multiplexes multiple MAC service data units (SDUs) into a MAC PDU and sends it out through the physical layer channel. When multiple logical channels have data transmission, and the total amount of data exceeds the current authorized transmission capacity, the problem of which logical channel should be given priority to transmission arises, which is called logical channel priority (LCP) processing.

### 5. Transmission resource allocation approach

The sidelink communication has two transmission resource allocation approaches, one is the network dynamic scheduling approach (mode 1), and the other is the terminal device autonomously selects in the network-configured or pre-configured resource pool (mode 2). The dynamic scheduling is that the network dynamically allocates transmission resources on the sidelink to the terminal device according to the cache data report of the terminal device, while autonomous selection is that the terminal device randomly selects transmission resources in the network-configured or pre-configured resource pool. The network may configure multiple resource pools for the terminal device on a bandwidth part (BWP). The specific allocation approach to be used is configured by the network side via radio resource control (RRC) signaling. In some embodiments, "pre-configuration" may be understood as defining, pre-defining, storing, pre-storing, pre-negotiating, curing, or pre-firing, etc.

In order to support direct communication between the terminal device and the terminal device, the SL communication approach is introduced. Optionally, the interface between the terminal device and the terminal device may be the PC 5.

Optionally, according to the correspondence relationship between the transmitting terminal device and the receiving terminal device, three transmission modes are supported on the SL: unicast, multicast, and broadcast. By way of example, the transmitting terminal device transmits the SCI on the PSCCH and transmits the second stage SCI on the PSSCH, for example, carrying resource locations and source and destination identifiers of transmission data, and the like. By way of example, for data packets enabled by HARQ feedback, the receiving terminal device performs hybrid automatic repeat request-acknowledgement (HARQ-ACK) feedback for the PSSCH on the PSFCH.

Optionally, uplink operation and downlink operation may be performed in an unlicensed frequency band, where both downlink and uplink channel access depend on LBT characteristics. The wireless device or base station first "senses" the communication channel, finding that there is no communication before initiating any transmission. When the communication channel is an unlicensed broadband carrier (e.g., several hundred megahertz), the LBT procedure relies on detecting energy levels over multiple sub-bands of the communication channel. Optionally, the LBT parameter (such as type/duration, clear channel evaluation parameters, etc.) may be configured by the base station on the wireless device.

In some embodiments, terms such as "up", "uplink", and "physical uplink" may be interchangeable with each other, terms such as "down", "downlink", and "physical downlink" may be interchangeable with each other.

Optionally, the wireless device or base station must first "sense" the communication channel, finding that there is no communication before initiating any transmission. The LBT type includes type 1 and type 2. Type 1 is based on the contention window, and the duration of channel monitoring is determined by a random number. It is not considered an access channel until the random number is equal to 0 and the channel is idle; and type 2 is based on a fixed-time monitoring channel, such as 25us, 16us, etc. The CAPC is a parameter related to LBT. Different CAPCs affect the priority in channel contention, and a smaller CAPC value indicates a higher priority.

The SL communication may use unlicensed spectrum, and the terminal device also needs to do LBT when transmitting SL data on the unlicensed spectrum. The consecutive LBT failure mechanism is likewise applicable to the SL communication in unlicensed spectrum. In some embodiments, terms such as terms such as "side", "sidelink", "side communication", "sidelink communication", "direct", "direct link", "direct communication", and "direct link communication" may be interchangeable with each other.

Optionally, for resource selection/reselection for single TB transmission, the MAC layer needs to provide a set of parameters to the physical layer (PHY), and the set of parameters may include some related parameters that other physical layers need to use when performing resource selection/reselection, such as a remaining PDB.

Optionally, the SL communication supports multiple consecutive slot transmission (MCSt), and the multiple consecutive slot transmission reduces the influence of the LBT on communication quality by transmitting over multiple consecutive slots. After successfully performing one LBT, the terminal device may transmit over the multiple consecutive slots.

Optionally, in some embodiments, the SL communication may support multiple consecutive slot transmission for a single TB (MCSt for a single TB) and multiple consecutive slot transmission for a plurality of TBs (MCSt for a plurality of TBs).

In some embodiments, the multiple consecutive slot transmission for the single TB may refer to a multiple repetitions of one TB in several consecutive slots. The multiple consecutive slot transmission for the plurality of TBs may mean that the transmission resource for the plurality of TBs are consecutive in slots. Optionally, for the multiple consecutive slot transmission for the plurality of TBs, different TBs are transmitted over the multiple consecutive slots.

Optionally, in some embodiments, when resource selection/reselection is performed for the TB, three resource selection/reselection schemes may be supported. For example, the detailed description of the three resource selection/reselection schemes is as follows.

Resource selection/reselection scheme 1: "best effort for a plurality of TBs", which includes at least one of the following steps 11 to 14:

In step 11, the MAC layer triggers the resource selection/reselection for the TB, and submits to the physical layer a set of parameters (*prio_{TX},* remaining PDB, *L*_{subCH} and *P*_{rsvp_TX}).

In step 12, the physical layer submits a candidate resource set to a higher layer, and the candidate resource set contains a single slot resource.

In step 13, the MAC layer randomly selects a set of resources from the candidate resource set submitted by the physical layer or implements multiple consecutive slot transmission (MCSt) according to the consecutive slot standard.

In step 14, steps 11 to 13 are repeated for different TBs, if necessary.

Resource selection/reselection scheme 2: guarantees MCSt for the single TB and best effort for the plurality of TBs, which includes at least one of the following steps 21 to 24:
In step 21, the MAC layer triggers the resource selection/reselection for the TB, submitting to the physical layer a set of parameters (*prio_{TX},* remaining PDB, *L*_{subCH} and *P*_{rsvp_TX}) and a parameter of "a number of slots for MCSt", in which the parameter of "the number of slots for the MCSt" may be derived based on the CAPC of logical channel/TB or otherwise.

In step 22, the physical layer submits a candidate resource set to the higher layer, and the candidate resource set includes a multiple slot resource. The multiple slot resource is used for transmitting the same TB.

In step 23, the MAC layer selects a candidate multiple consecutive slot resource randomly or according to the consecutive slot standard in the candidate resource set submitted by the physical layer.

In step 24, steps 21 to 23 are repeated for different TBs, if necessary.

Optionally, for a plurality of TBs, the MAC layer may respectively trigger independent resource selection/reselection, and respectively transmit a set of parameters for each TB. The set of parameters may include the parameter of "the number of slots for the multiple consecutive slot transmission" submitted by the MAC layer to the physical layer. The physical layer may provide a candidate resource set for each TB, and the candidate resource is a multiple consecutive slot resource. The physical layer submits a "multiple consecutive slot" resource set to the MAC layer, the MAC layer performs the resource selection/reselection in the candidate resource set corresponding to each TB, and the resource selected is a multiple consecutive slot resource.

Resource selection/reselection scheme 3: guarantee MCSt for the plurality of TBs, which includes at least one of the following steps 31 to 34:
In step 31, the MAC layer triggers the resource selection/reselection once for the plurality of TBs, submitting to the physical layer a set of parameters related to the plurality of TBs (*prio_{TX},* remaining PDB, *L*_{subCH} and *P*_{rsvp_TX}) and a parameter of "the number of slots for the MCSt" of the TB, in which the parameter of "the number of slots for the MCSt" may be derived based on the CAPCs of the plurality of TBs.

In step 32, the physical layer submits a candidate resource set to the higher layer, and the candidate resource set includes a multiple slot resource. The multiple slot resource is used for transmitting the plurality of TBs.

In step 33, the MAC layer selects a candidate multiple consecutive slot resource in the candidate resource set submitted by the physical layer.

Optionally, for the plurality of TBs, the MAC layer may trigger resource selection/reselection only once, and transmit only one set of parameters for the plurality of TBs, and the set of parameters may include one parameter of "the number of slots for the consecutive slot transmission" submitted by the MAC layer to the physical layer. Through the set of parameters, the physical layer may provide a candidate resource set for the plurality of TBs, and the resource in the candidate resource set is a multiple consecutive slot resource. The MAC layer performs the resource selection/reselection from the candidate resource set, the resource selected is a multiple slot resource, and the multiple slot resource may be used for transmitting the plurality of TBs, ensuring the continuity of the plurality of TBs in the time domain.

However, there is currently a lack of effective means to solve how to handle the LBT failure of the multiple consecutive slot transmission.

A resource reselection method and apparatus provided by the present disclosure are described in detail below in conjunction with the accompanying drawings.

In some embodiments, the method of the present disclosure may be applied to a sidelink-unlicensed (SL-U) scenario, and may also be applied to a scenario of "how to deal with LBT failure of multiple consecutive slot transmission" problem in other fields such as licensed spectrum.

In embodiments of the present disclosure, in order to support direct communication between the UE and the UE, a sidelink communication approach is introduced, and the interface between the UE and the UE is PC-5. According to the correspondence relationship between the transmitting and receiving UE, three transmission modes are supported on sidelink: unicast, multicast and broadcast. The transmitting UE transmits sidelink control information (SCI) on the PSCCH and transmits a second stage SCI on the PSSCH, which carries resource locations, source and destination identifiers, and the like for transmitting data. For the data packet enabled by the HARQ feedback, the receiving UE performs HARQ-ACK feedback for the PSSCH on the physical sidelink feedback channel (PSFCH). Currently, the sidelink communication has two transmission resource allocation approaches, one is the network dynamic scheduling approach (mode 1), and the other is the UE autonomously selects in the network-configured or pre-configured resource pool (mode 2). The dynamic scheduling is that the network dynamically allocates transmission resources on the sidelink to the UE according to the cache data report of the UE, while autonomous selection is that the UE randomly selects transmission resources in the network-configured or pre-configured resource pool. The network may configure a multiple resource pool for the UE on a BWP. The specific allocation approach to be used is configured by the network side via RRC signaling.

The NR-U supports uplink and downlink operations in unlicensed frequency bands. In NR-U, channel access for both downlink and uplink depends on LBT characteristics. The wireless device or base station needs to first "sense" the communication channel, finding that there is no communication before initiating any transmission. The LBT type includes type 1 and type 2. Type 1 is based on the contention window, and the duration of channel monitoring is determined by a random number. It is not considered an access channel until the random number is equal to 0 and the channel is idle; and type 2 is based on a fixed-time monitoring channel, such as 25us, 16us, etc. The channel access priority class (CAPC) is a parameter related to LBT. Different CAPCs affect the priority in channel contention. A smaller CAPC value indicates a higher priority. The terminal device determines the CAPC of a MAC PDU according to the following criteria:
1. If the SL MAC PDU contains only the SL MAC CE, and the CAPC of the SL MAC PDU is the highest priority (the lowest CAPC value).
2. If the SL MAC PDU contains an SCCH SDU (sidelink control channel SDU), and the CAPC of the SL MAC PDU is the highest priority (the lowest CAPC value).
3. If the SL MAC PDU contains an SL MAC SDU, the CAPC of the SL MAC PDU is the lowest priority CAPC associated with the logical channel multiplexed to the TB (CAPC is configured by logical channel) regardless of whether the SL MAC PDU contains an SL MAC CE.

In embodiments of the present disclosure, the multiple consecutive slot transmission (MCSt) is supported. The multiple consecutive slot transmission reduces the influence of the LBT on communication quality by transmitting over multiple consecutive slots. After performing one LBT, the terminal device may transmit over multiple consecutive slots.

In embodiments of the present disclosure, a method for reselecting an MCSt resource is proposed, which solves the problems of whether the resource reselection should be triggered if the LBT for the MCSt fails, and whether there are different processing clearly for the single TB MCSt and the multiple TB MCSt.

In embodiments of the present disclosure, the resource reselection is not triggered if the LBT of the MCSt for the single TB fails. Specifically, for the multiple consecutive slot transmission of the same TB, if the LBT fails, the terminal device does not trigger the resource reselection. The terminal device continues to perform the LBT before the next transmission slot until the available consecutive slots are less than or equal to a preset threshold or until there are no available transmission resources (the LBTs on all multiple slot transmission resources fail), and the terminal device triggers the resource reselection. The multiple consecutive slot transmission resource for the same TB reselected includes a new transmission resource and a retransmission resource of the same TB. The terminal device may determine the preset threshold according to the implementation. Specifically, it may be determined by the MAC layer, for example, 1/2 * "the number of slots for the MCSt" or other ratios, which are not specifically limited in the embodiments of the present disclosure.

In embodiments of the present disclosure, if the LBT of the single TB/multiple TB MCSt fails, the resource reselection is triggered. Specifically, for the multiple consecutive slot transmission for the same TB/multiple different TBs, if the LBT fails, the terminal device triggers the resource reselection. The multiple consecutive slot transmission resource for the same TB/multiple TB selected includes a new transmission resource and the retransmission resource of the same TB/multiple TB.

In embodiments of the present disclosure, for the multiple TB MCSt, the resource reselection is not triggered. Specifically, for the multiple consecutive slot transmission for the plurality of different TBs, if the LBT fails, the terminal device does not trigger the resource reselection. The terminal device continues to perform the LBT before the next retransmission MCSt transmission slot until the number of available multi-TB transmissions is less than or equal to a preset threshold or until there are no available multiple TB consecutive transmission resource, and the terminal device triggers the resource reselection. The multiple consecutive slot transmission resource for the multiple TB selected includes a new transmission resource and the retransmission resource of the multiple TB. The terminal device may determine the preset threshold according to the implementation. Specifically, it may be determined by the MAC layer, for example, 1/2 * "the number of slots for the MCSt" or other ratios, which are not specifically limited here.

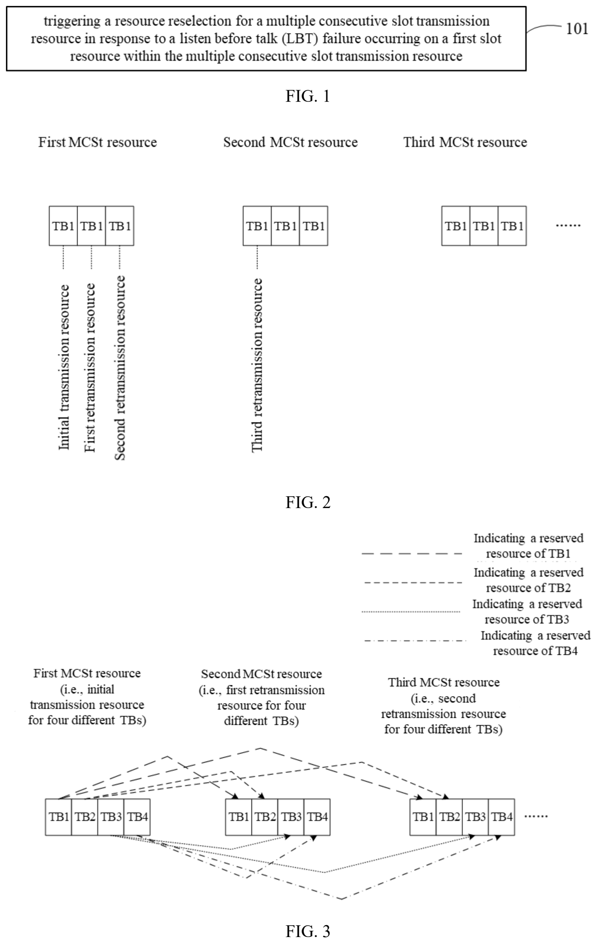

Referring to FIG. 1, FIG. 1 is a flow chart of a resource reselection method provided by an embodiment of the present disclosure. It should be noted that the method may be performed by a communication device, the communication device may be a terminal device in a possible implementation, and the method may be performed by the terminal device as an example. As illustrated in FIG. 1, the method may include but is not limited to the following step.

In step 101: triggering a resource reselection for a multiple consecutive slot transmission resource in response to a listen before talk (LBT) failure occurring on a first slot resource within the multiple consecutive slot transmission resource.

In some embodiments, the multiple consecutive slot transmission resource includes a plurality of consecutive slot resources, for transmitting the plurality of TBs.

In some embodiments, since the terminal device does not perform a logical channel priority (LCP) procedure, that is to say, packetization is not performed when the MAC layer of the terminal device submits a parameter for the resource selection/reselection (such as one or more of the following parameters: *prio_{TX},* remaining PDB, *L*_{subCH}, *P*_{rsvp_TX}, "the number of slots for the multiple consecutive slot transmission", etc.) to the physical layer of the terminal device, the plurality of TBs may be determined by the terminal device according to one or more of a buffer state of a logical channel (LCH) for the data to be transmitted, logical channel priority, size of the buffer data, remaining PDB, etc.

In some embodiments, the TB may be a sidelink media access control protocol data unit (SL MAC PDU), and the name of the TB is not limited.

In some embodiments, the plurality of TBs may be a plurality of identical TBs (i.e., the same TB) or a plurality of different TBs.

In some embodiments, the multiple consecutive slot transmission for the plurality of identical TBs may also be referred to as the multiple consecutive slot transmission for the single TB. The resource selection/reselection may be triggered once for the plurality of identical TBs, for example, the resource selection/reselection may be performed for the plurality of identical TBs using any one of the above-described resource selection/reselection scheme 1 and the resource selection/reselection scheme 2 to determine the multiple consecutive slot transmission resource for transmitting the plurality of identical TBs, and the multiple consecutive slot transmission resource may include a multiple consecutive slot initial transmission resource and a multiple consecutive slot retransmission resource. In some embodiments, terms such as "multiple consecutive slot initial transmission resource" and "multiple consecutive slot new transmission resource" may be replaced with each other.

In some embodiments, when "transmit" is used as a verb, "transmit" refers to send, that is, when "transmit" is used as a verb, terms such as "transmit" and "send" may be replaced with each other. For example, the multiple consecutive slot transmission resource is used for transmitting a plurality of TBs, and it may be said that the multiple consecutive slot transmission resource is used for sending a plurality of TBs.

In some embodiments, terms such as "initial transmission resource", "new transmission resource", "new transmission", and "initial transmission" may be replaced with each other.

Optionally, the resource selection/reselection scheme 1 may be used to perform the resource selection/reselection for a plurality of identical TBs, for example, the MAC layer of the terminal device submits a set of parameters (*prio_{TX},* remaining PDB, *L*_{subCH}, and *P*_{rsvp_TX}) to the physical layer for the TB. The physical layer provides a candidate resource set for the TB, and the resource in the candidate resource set is a single slot resource. The MAC layer acquires a candidate resource set for the TB from the physical layer, the resource selection/reselection is performed in the candidate resource set; and the resource selected is the multiple consecutive slot transmission resource including an initial transmission resource and a retransmission resource.

Optionally, the resource selection/reselection scheme 2 may be used to perform the resource selection/reselection for a plurality of identical TBs, for example, the MAC layer of the terminal device submits a set of parameters (*prio_{TX},* remaining PDB, *L*_{subCH} and *P*_{rsvp_TX}) and a parameter of "the number of slots for the multiple consecutive slot transmission" to the physical layer for the TB. The physical layer provides a candidate resource set for the TB through these parameters, and the resource in the candidate resource set are a multiple consecutive slot resource. The MAC layer acquires a candidate resource set for the TB from the physical layer, the resource selection/reselection is performed in the candidate resource set; and the resource selected is the multiple consecutive slot transmission resource including a multiple consecutive slot initial transmission resource and a multiple consecutive slot retransmission resource.

For example, taking the multiple consecutive slot transmission resource for transmitting three identical TB1 as an example, as shown in FIG. 2, which is an example diagram of the multiple consecutive slot transmission resource for transmitting three identical TB1, the resource selection/reselection of the multiple consecutive slot transmission resource for the plurality of identical TBs is performed using any one of the above-described resource selection/reselection scheme 1 and the resource selection/reselection scheme 2. The multiple consecutive slot transmission resource may include a multiple consecutive slot initial transmission resource (a first MCSt resource as shown in FIG. 2), and multiple consecutive slot retransmission resources (a second MCSt resource, a third MCSt resource, etc. as shown in FIG. 2). The first slot resource in the first MCSt resource may be an initial transmission resource of TB1, the second slot resource in the first MCSt resource may be a first retransmission resource of TB1, the third slot resource in the first MCSt resource may be a second retransmission resource of TB1, the first slot resource in the second MCSt resource may be a third retransmission resource of TB1, and so on.

In some embodiments, independent resource selection/reselection may be triggered for each TB of the plurality of different TBs, for example, the resource selection/reselection scheme 1 may be used to perform the resource selection/reselection for each TB to determine the multiple consecutive slot transmission resource for transmitting the plurality of different TBs, and the multiple consecutive slot transmission resource may include a multiple consecutive slot initial transmission resource and a multiple consecutive slot retransmission resource. Optionally, the resource selection/reselection scheme 1 may be used to perform the resource selection/reselection for the plurality of different TBs, for example, for each TB of the plurality of different TBs, the MAC layer of the terminal device submits a set of parameters (*prio_{TX},* remaining PDB, *L*_{subCH}, and *P*_{rsvp_TX}) to the physical layer for each TB. The physical layer provides a candidate resource set for each TB, and the resource in the candidate resource set is the single slot resource. The MAC layer performs the resource selection/reselection in the candidate resource set corresponding to each TB, and a resource selected includes an initial transmission resource and a retransmission resource of each TB. When selecting the initial transmission resource and the retransmission resource of each TB, the MAC layer tries to ensure that the initial transmission resource of different TBs and the retransmission resource of different TBs are consecutive.

For example, taking the multiple consecutive slot transmission resource for transmitting four different TBs as an example, assuming that the four different TBs are TB1, TB2, TB3, and TB4, respectively, the resource selection/reselection scheme 1 may be used to perform the resource selection/reselection for each TB. That is, for TB1, the MAC layer submits a set of parameters (*prio_{TX},* remaining PDB, *L*_{subCH}, and *P*_{rsvp_TX}) to the physical layer for TB1, the physical layer provides a candidate resource set for the TB1 through the parameters, and the resource in the candidate resource set is the single slot resource. The MAC layer performs the resource selection/reselection in the candidate resource set of TB1, and the resource selected includes the initial transmission resource and the retransmission resource of TB1. For example, as shown in FIG. 3, the first slot resource in the first MCSt resource is the initial transmission resource of TB1, the first slot resource in the second MCSt resource is the first retransmission resource of TB1, and the first slot resource in the third MCSt resource is the second retransmission resource of TB1. For TB2, the MAC layer submits a set of parameters (*prio_{TX},* remaining PDB, *L*_{subCH}, and *P*_{rsvp_TX}) to the physical layer for TB2, the physical layer provides a candidate resource set for TB2 through the parameters, and the resource in the candidate resource set is the single slot resource. The MAC layer performs the resource selection/reselection in the candidate resource set of TB2, and the resource selected includes the initial transmission resource and the retransmission resource of TB2. For example, as shown in FIG. 3, the second slot resource in the first MCSt resource is the initial transmission resource of TB2, the second slot resource in the second MCSt resource is the first retransmission resource of TB2, and the second slot resource in the third MCSt resource is the second retransmission resource of TB2. For TB3, the MAC layer submits a set of parameters (*prio_{TX},* remaining PDB, *L*_{subCH}, and *P*_{rsvp_TX}) to the physical layer for TB3, the physical layer provides a candidate resource set for TB3 through the parameters, and the resource in the candidate resource set is the single slot resource. The MAC layer performs the resource selection/reselection in the candidate resource set of TB3, and the resource selected include the initial transmission resource and the retransmission resource of TB3. For example, as shown in FIG. 3, the third slot resource in the first MCSt resource is the initial transmission resource of TB3, the third slot resource in the second MCSt resource is the first retransmission resource of TB3, and the third slot resource in the third MCSt resource is the second retransmission resource of TB3. For TB4, the MAC layer submits a set of parameters (*prio_{TX},* remaining PDB, *L*_{subCH}, and *P*_{rsvp_TX}) to the physical layer for TB4, the physical layer provides a candidate resource set for TB4 through the parameters, and the resource in the candidate resource set is the single slot resource. The MAC layer performs the resource selection/reselection in the candidate resource set of TB4, and the resource selected includes the initial transmission resource and the retransmission resource of TB4. For example, as shown in FIG. 3, the fourth slot resource in the first MCSt resource is the initial transmission resource of TB4, the fourth slot resource in the second MCSt resource is the first retransmission resource of TB4, and the fourth slot resource in the third MCSt resource is the second retransmission resource of TB4. When the MAC layer performs the resource selection/reselection in the candidate resource set of each TB, the MAC layer tries to ensure that the initial transmission resources selected for each TB are consecutive in slots, and the retransmission resources selected for each TB are consecutive in slots. As shown in FIG. 3, taking the first MCSt resource as an example, the first MCSt resource is the initial transmission resources of TB1, TB2, TB3, and TB4, and the initial transmission resources of TB1, TB2, TB3, and TB4 are consecutive in slots.

In some embodiments, independent resource selection/reselection may be triggered for each TB of the plurality of different TBs, for example, the resource selection/reselection scheme 2 may be used to perform the resource selection/reselection for each TB to determine the multiple consecutive slot transmission resource for transmitting the plurality of different TBs, and the multiple consecutive slot transmission resource may include an multiple consecutive slot initial transmission resource and a multiple consecutive slot retransmission resource. Optionally, the resource selection/reselection scheme 2 may be used to perform the resource selection/reselection for the plurality of different TBs. For example, for each TB of the plurality of different TBs, the MAC layer of the terminal device submits a set of parameters (*prio_{TX},* remaining PDB, *L*_{subCH}, and *P*_{rsvp_TX}) and the parameter of "the number of slots for the multiple consecutive slot transmission" to the physical layer for each TB. The physical layer provides a candidate resource set for each TB through these parameters, and the resource in the candidate resource set is the multiple consecutive slot resource. The MAC layer performs the resource selection/reselection in the candidate resource set corresponding to each TB, and a resource selected includes a multiple consecutive slot initial transmission resource and a multiple consecutive slot retransmission resource of each TB. When selecting the multiple consecutive slot initial transmission resource and the multiple consecutive slot retransmission resource for each TB, the MAC layer tries to ensure that the multiple consecutive slot initial transmission resources for the different TBs and the multiple consecutive slot retransmission resources for the different TBs are consecutive.

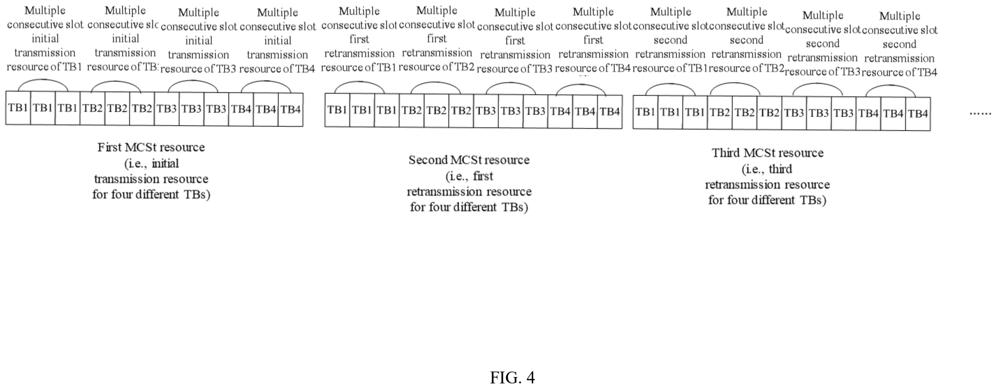

For example, taking the multiple consecutive slot transmission resource for transmitting four different TBs as an example, assuming that the four different TBs are TB1, TB2, TB3, and TB4, respectively, the resource selection/reselection scheme 2 may be used to perform the resource selection/reselection for each TB. That is, for TB1, the MAC layer submits a set of parameters (*prio_{TX},* remaining PDB, *L*_{subCH}, and *P*_{rsvp_TX}) and the parameter of "the number of slots for the multiple consecutive slot transmission" (taking 3 as an example) to the physical layer for TB1, the physical layer provides a candidate resource set for the TB1 through these parameters, and the resource in the candidate resource set is the multiple consecutive slot resource (assuming that the number of slots for the multiple consecutive slot transmission is 3, and each candidate resource may include three consecutive slot resources). The MAC layer performs the resource selection/reselection in the candidate resource set for the TB1, and the resource selected includes the multiple consecutive slot initial transmission resource and the multiple consecutive slot retransmission resource for TB1. For example, as shown in FIG. 4, the first three slot resources in the first MCSt resource are the multiple consecutive slot initial transmission resource of TB1 (the initial transmission of TB1, the first retransmission of TB1, the second retransmission of TB1), the first three slot resources in the second MCSt resource are the first multiple consecutive slot retransmission resource of TB1 (the third retransmission of TB1, the fourth retransmission of TB1, and the fifth retransmission of TB1), and the first three slot resources in the third MCSt resource are the second multiple consecutive slot retransmission resource of TB1. For TB2, the MAC layer submits a set of parameters (*prio_{TX},* remaining PDB, *L*_{subCH}, and *P*_{rsvp_TX}) and the parameter of "the number of slots for the multiple consecutive slot transmission" (taking 3 as an example) to the physical layer for TB2, the physical layer provides a candidate resource set for TB2 through the parameters, and the candidate resource in the candidate resource set is the multiple consecutive slot resource (assuming that the number of slots for the multiple consecutive slot transmission is 3, and each candidate resource may include three consecutive slot resources). The MAC layer performs the resource selection/reselection in the candidate resource set for TB2, and the resource selected includes the multiple consecutive slot initial transmission resource and the multiple consecutive slot retransmission resource for TB2. For example, as shown in FIG. 4, the fourth to sixth slot resources in the first MCSt resource are the multiple consecutive slot initial transmission resource of TB2 (initial transmission of TB2, first retransmission of TB2, second retransmission of TB2), the fourth to sixth slot resources in the second MCSt resource are the first multiple consecutive slot retransmission resource of TB2 (third retransmission of TB2, fourth retransmission of TB2, fifth retransmission of TB2), and the fourth to sixth slot resources in the third MCSt resource are the second multiple consecutive slot retransmission resource of TB2. For TB3, the MAC layer submits a set of parameters (*prio_{TX},* remaining PDB, *L*_{subCH}, and *P*_{rsvp_TX}) and the parameter of "the number of slots for the multiple consecutive slot transmission" (taking 3 as an example) to the physical layer for TB3, the physical layer provides a candidate resource set for TB3 through the parameters, and the candidate resource in the candidate resource set is the multiple consecutive slot resource (assuming that the number of slots for the multiple consecutive slot transmission is 3, and each candidate resource may include three consecutive slot resources). The MAC layer performs the resource selection/reselection in the candidate resource set for TB3, and the resource selected includes the multiple consecutive slot initial transmission resource and the multiple consecutive slot retransmission resource for TB3. For example, as shown in FIG. 4, the seventh to ninth slot resources in the first MCSt resource are the multiple consecutive slot initial transmission resource of TB3 (initial transmission of TB3, first retransmission of TB3, second retransmission of TB3), the seventh to ninth slot resources in the second MCSt resource are the first multiple consecutive slot retransmission resource of TB3 (third retransmission of TB3, fourth retransmission of TB3, fifth retransmission of TB3), and the seventh to ninth slot resources in the third MCSt resource are the second multiple consecutive slot retransmission resource of TB3. For TB4, the MAC layer submits a set of parameters (*prio_{TX},* remaining PDB, *L*_{subCH}, and *P*_{rsvp_TX}) and the parameter of "the number of slots for the multiple consecutive slot transmission" (taking 3 as an example) to the physical layer for TB4, the physical layer provides a candidate resource set for TB4 through the parameters, and the candidate resource in the candidate resource set are the multiple consecutive slot resource (assuming that the number of slots for the multiple consecutive slot transmission is 3, and each candidate resource may include three consecutive slot resources). The MAC layer performs the resource selection/reselection in the candidate resource set for TB4, and the resource selected includes the multiple consecutive slot initial transmission resource and the multiple consecutive slot retransmission resource for TB4. For example, as shown in FIG. 4, the tenth to twelfth slot resources in the first MCSt resource are the multiple consecutive slot initial transmission resource of TB4 (initial transmission of TB4, first retransmission of TB4, second retransmission of TB4), the tenth to twelfth slot resources in the second MCSt resource are the first multiple consecutive slot retransmission resource of TB4 (third retransmission of TB4, fourth retransmission of TB4, fifth retransmission of TB4), and the tenth to twelfth slot resources in the third MCSt resource are the second multiple consecutive slot retransmission resource of TB4. The MAC layer performs the resource selection/reselection in the candidate resource set of each TB, an initial resource selected for each TB is consecutive in slots, and a retransmission resource selected for each TB is consecutive in slots. When selecting the multiple consecutive slot initial transmission resource and the multiple consecutive slot retransmission resource for each TB, the MAC layer tries to ensure that the multiple consecutive slot initial transmission resources for the different TBs and the multiple consecutive slot retransmission resources for the different TBs are consecutive.

In some embodiments, the resource selection/reselection may be triggered once for the plurality of different TBs, for example, the resource selection/reselection scheme 3 may be used to perform the resource selection/reselection for each TB to determine the multiple consecutive slot transmission resource for transmitting the plurality of different TBs, and the multiple consecutive slot transmission resource may include the multiple consecutive slot initial transmission resource and the multiple consecutive slot retransmission resource. Optionally, the resource selection/reselection scheme 3 may be used to perform the resource selection/reselection for the plurality of different TBs. For example, for the plurality of different TBs, the MAC layer of the terminal device submits a set of parameters (*prio_{TX},* remaining PDB, *L*_{subCH}, and *P*_{rsvp_TX}) and the parameter of "the number of slots for the multiple consecutive slot transmission" to the physical layer for the plurality of TBs. The physical layer provides a candidate resource set for the plurality of TBs through these parameters, and the candidate resource in the candidate resource set are the multiple consecutive slot resource. The MAC layer performs the resource selection/reselection in the candidate resource set of the plurality of TBs, and a resource selected includes a multiple consecutive slot initial transmission resource and a multiple consecutive slot retransmission resource of the plurality of TBs.

For example, taking the multiple consecutive slot transmission resource for transmitting four different TBs as an example, assuming that the four different TBs are TB1, TB2, TB3, and TB4, respectively, the resource selection/reselection scheme 3 may be used to perform the resource selection/reselection for four different TBs. That is, for TB1, TB2, TB3, and TB4, the MAC layer submits a set of parameters (*prio_{TX},* remaining PDB, *L*_{subCH}, and *P*_{rsvp_TX}) and the parameter of "the number of slots for the multiple consecutive slot transmission" (taking 4 as an example) to the physical layer for the four different TBs, the physical layer provides a candidate resource set for the four different TBs through these parameters, and the resource in the candidate resource set is the multiple consecutive slot resource (assuming that the number of slots for the multiple consecutive slot transmission is 4, and each candidate resource may include four consecutive slot resources).The MAC layer performs the resource selection/reselection in the candidate resource set, and the resource selected includes the initial transmission resources and the retransmission resources of four different TBs. For example, as shown in FIG. 3, four consecutive slot resources in the first MCSt resource are initial transmission resources of the four different TBs, the second MCSt resource is the first retransmission resources of the four different TBs, and the third MCSt resource is the second retransmission resources of the four different TBs.

In some embodiments, the terminal device may perform the LBT on a first slot resource within the multiple consecutive slot transmission resource, and if the LBT is successful, the terminal device may transmit the plurality of TBs on the multiple consecutive slot transmission resource.

In some embodiments, the terminal device performs the LBT on a first slot resource within the multiple consecutive slot transmission resource, and if the LBT fails, the terminal device may directly trigger the resource reselection for the multiple consecutive slot transmission resource. In some embodiments, the terminal device performs the LBT on a first slot resource within the multiple consecutive slot transmission resource, and if the LBT fails, the terminal device may not trigger the resource reselection for the multiple consecutive slot transmission resource, for example, the terminal device may trigger the resource reselection for the multiple consecutive slot transmission resource when a certain condition is satisfied.

It should be noted that since the plurality of TBs may be the same TB or a plurality of different TBs, the resource selection/reselection scheme 1, the resource selection/reselection scheme 2, or the resource selection/reselection scheme 3 may be used to select a resource for the TB. An optional implementation of how to "trigger the resource reselection for the multiple consecutive slot transmission resource" is described below from various aspects.

In some embodiments, the plurality of TBs are the same TB, and the optional implementation of triggering the resource reselection for the multiple consecutive slot transmission resource may include but is not limited to at least one of: submitting a first parameter by the MAC layer of the terminal device to a physical layer of the terminal device, in which the first parameter is used for the resource reselection for the multiple consecutive slot transmission resource; acquiring a first candidate resource set for the TB from the physical layer, in which a resource in the first candidate resource set is a single slot resource; and selecting the multiple consecutive slot transmission resource for the TB in the first candidate resource set, in which the multiple consecutive slot transmission resource selected includes an initial transmission resource and a retransmission resource of the TB.

Optionally, the first parameter may include, but is not limited to, one or more of the following: a remaining PDB; a number of subchannels *L*_{subCH} for a physical sidelink shared channel (PSSCH) transmission in one subframe; a resource reservation interval *P*_{rsvp_TX} for a PSSCH transmission; or priority information *prio_{TX}* for a PSSCH transmission. In an embodiment, the first parameter may include the remaining PDB. In an embodiment, the first parameter may include *L*_{subCH}. In an embodiment, the first parameter may include *P*_{rsvp_TX}. In an embodiment, the first parameter may include *prio_{TX}*. In an embodiment, the first parameter may include the remaining PDB, *L*_{subCH}, *P*_{rsvp_TX}, and *prio_{TX}.* It should be noted that above embodiments are not exhaustive, but are only illustrative of some of the embodiments, and above embodiments may be implemented individually or in combination, and above embodiments are only illustrative and are not intended to be specific limitations on the scope of protection of embodiments of the present disclosure.

Optionally, for the multiple consecutive slot transmission of the same TB, if the LBT fails, the terminal device triggers the resource reselection for the multiple consecutive slot transmission resource. The multiple consecutive slot transmission resource for the same TB reselected includes an initial transmission resource and a retransmission resource of the same TB. For example, the resource selection/reselection scheme 1 may be used to reselect the multiple consecutive slot transmission resource for the same TB, and for this implementation, reference may be made to the above description of the resource selection/reselection scheme 1 and related implementations, which is not repeated here.

In some embodiments, the plurality of TBs are the same TB, and the optional implementation of triggering the resource reselection for the multiple consecutive slot transmission resource may include but is not limited to at least one of: submitting a second parameter by the MAC layer of the terminal device to a physical layer of the terminal device, in which the second parameter is used for the resource reselection for the multiple consecutive slot transmission resource; acquire a second candidate resource set for the TB from the physical layer, in which a resource in the second candidate resource set is a multiple consecutive slot resource; and selecting the multiple consecutive slot transmission resource for the TB in the second candidate resource set, in which the multiple consecutive slot transmission resource selected includes a multiple consecutive slot initial transmission resource and a multiple consecutive slot retransmission resource of the TB.

Optionally, the second parameter may include, but is not limited to, one or more of the following: a remaining PDB; a number of subchannels *L*_{subCH} for a physical sidelink shared channel (PSSCH) transmission in one subframe; a resource reservation interval *P*_{rsvp_TX} for a PSSCH transmission; priority information *prio_{TX}* for a PSSCH transmission; or a number of slots for the multiple consecutive slot transmission. In an embodiment, the second parameter may include the remaining PDB. In an embodiment, the second parameter may include *L*_{subCH}. In an embodiment, the second parameter may include *P*_{rsvp_TX}. In an embodiment, the second parameter may include *prio_{TX}.* In an embodiment, the second parameter may include the number of slots for the multiple consecutive slot transmission. In an embodiment, the second parameter may include the remaining PDB, *L*_{subCH}, *P*_{rsvp_TX}, *prio_{TX}*, and the number of slots for the multiple consecutive slot transmission. It should be noted that above embodiments are not exhaustive, but are only illustrative of some of the embodiments, and above embodiments may be implemented individually or in combination, and above embodiments are only illustrative and are not intended to be specific limitations on the scope of protection of embodiments of the present disclosure.

Optionally, for the multiple consecutive slot transmission of the same TB, if the LBT fails, the terminal device triggers the resource reselection for the multiple consecutive slot transmission resource. The multiple consecutive slot transmission resource for the same TB reselected includes an initial transmission resource and a retransmission resource of the same TB. For example, the resource selection/reselection scheme 2 may be used to reselect the multiple consecutive slot transmission resource for the same TB, and for the implementation approach, reference may be made to the description of the resource selection/reselection scheme 2 and related implementation approaches, which is not repeated here.

In some embodiments, the plurality of TBs are a plurality of different TBs; and an optional implementation of triggering the resource reselection for the multiple consecutive slot transmission resource may include triggering the resource reselection for each TB of the plurality of different TBs.

In some embodiments, the optional implementation of respectively triggering the resource reselection for each TB of the plurality of different TBs includes at least of: submitting a first parameter corresponding to each TB by the MAC layer of the terminal device to a physical layer of the terminal device, in which the first parameter corresponding to each TB is used for the resource reselection for the corresponding TB; acquiring, from the physical layer, a third candidate resource set corresponding to each TB, in which a resource in the third candidate resource set is a single slot resource; performing resource selection or reselection in the third candidate resource set corresponding to each TB to determine the multiple consecutive slot transmission resource for the plurality of different TBs, in which a resource selected includes an initial transmission resource and a retransmission resource of each TB.

Optionally, for the multiple consecutive slot transmission of the plurality of different TBs, if the LBT fails, the terminal device triggers the resource reselection for the multiple consecutive slot transmission resource. The multiple consecutive slot transmission resource for the plurality of different TBs reselected includes an initial transmission resource and the retransmission resource of the plurality of TBs. For example, the resource selection/reselection scheme 1 may be used to reselect the multiple consecutive slot transmission resource for the plurality of TBs, and for the implementation approach, reference may be made to the description of the resource selection/reselection scheme 1 and related implementation approaches, which is not repeated here.

In some embodiments, the optional implementation of triggering the resource reselection for the multiple consecutive slot transmission resource for the plurality of TBs includes at least one of: submitting a second parameter corresponding to the plurality of different TBs by the MAC layer of the terminal device to the physical layer of the terminal device, in which the second parameter corresponding to the plurality of TBs is used for the resource reselection for the plurality of different TBs; acquiring a fifth candidate resource set for the plurality of TBs from a physical layer, in which a resource in the fifth candidate resource set is a multiple consecutive slot resource; and selecting the multiple consecutive slot transmission resource for the plurality of different TBs in the fifth candidate resource set, in which the multiple consecutive slot transmission resource selected includes a multiple consecutive slot initial transmission resource and a multiple consecutive slot retransmission resource of the plurality of different TBs. Optionally, for the multiple consecutive slot transmission of the plurality of different TBs, if the LBT fails, the terminal device triggers the resource reselection for the multiple consecutive slot transmission resource. The multiple consecutive slot transmission resource for the plurality of different TBs reselected includes an initial transmission resource and the retransmission resource of the plurality of TBs. For example, the resource selection/reselection scheme 3 may be used to reselect the multiple consecutive slot transmission resource for the plurality of TBs, and for the implementation approach, reference may be made to the description of the resource selection/reselection scheme 3 and related implementation approaches, which is not repeated here.

In some embodiments, the terminal device performs the LBT on the first slot resource within the multiple consecutive slot transmission resource, and if the LBT fails, the terminal device does not trigger the resource reselection for the multiple consecutive slot transmission resource. Optionally, the terminal device performs the LBT on the first slot resource within the multiple consecutive slot transmission resource, and if the LBT fails, the terminal device triggers the resource reselection for the multiple consecutive slot transmission resource only when the remaining multiple consecutive slot transmission resources satisfy a certain condition.

In some embodiments, the plurality of TBs are the same TB; and the optional implementation of triggering the resource reselection for the multiple consecutive slot transmission resource may include: continuing to perform the LBT on a next slot resource until the first reselection condition is satisfied, for example, the number of consecutive slots within the multiple consecutive slot transmission resource being less than or equal to a first threshold, or the LBT failure occurring on all slot resources within the multiple consecutive slot transmission resource, in which the next slot resource is a slot resource adjacent to a previous slot resource on which the LBT failure occurred within the multiple consecutive slot transmission resource; and triggering the resource reselection for the multiple consecutive slot transmission resource.

As an example, as shown in FIG. 2, for the multiple consecutive slot transmission resource for the same TB, the terminal device performs the LBT on a first slot resource within the multiple consecutive slot transmission resource, and if the LBT fails, the terminal device does not trigger the resource reselection for the multiple consecutive slot transmission resource; the terminal device may continue to perform the LBT on the second slot resource; and if the LBT failure occurs on the second slot resource, the terminal device continues to perform the LBT on the next slot resource until the first reselection condition is satisfied, for example, the number of the available consecutive slots within the multiple consecutive slot transmission resource is less than or equal to the first threshold, or the LBT failure occurs on all slot resources within the consecutive slot transmission resource, and the terminal device triggers the resource reselection for the multiple consecutive slot transmission resource. Optionally, the resource selection/reselection scheme 1 may be used to select the resource for the TB. For example, the MAC of the terminal device submits a first parameter to a physical layer of the terminal device, in which the first parameter is used for the resource reselection for the multiple consecutive slot transmission resource; acquires a first candidate resource set for the TB from the physical layer, in which the resource in the first candidate resource set is the single slot resource; and selects the multiple consecutive slot transmission resource for the TB in the first candidate resource set, in which the multiple consecutive slot transmission resource selected includes an initial transmission resource and a retransmission resource of the TB. Alternatively, optionally, the resource selection/reselection scheme 2 may be used to select the resource for the TB. For example, the MAC layer of the terminal device submits a second parameter to a physical layer of the terminal device, in which the second parameter is used for the resource reselection for the multiple consecutive slot transmission resource; acquires a second candidate resource set for the TB from the physical layer, in which a resource in the second candidate resource set is a multiple consecutive slot resource; and selects the multiple consecutive slot transmission resource for the TB in the second candidate resource set, in which the multiple consecutive slot transmission resource selected includes a multiple consecutive slot initial transmission resource and a multiple consecutive slot retransmission resource of the TB.

For example, as shown in FIG. 2, if the LBT failure occurs on the first slot resource in the first MCSt resource, the terminal device does not trigger the resource reselection, and the terminal device may continue to perform the LBT on the second slot resource in the first MCSt resource. If the LBT failure occurs on the second slot resource in the first MCSt resource, if the subsequent available consecutive slots are greater than the first threshold, the terminal device does not trigger the resource reselection, and the terminal device continues to perform the LBT on the third slot resource in the first MCSt resource. If the LBT of the multiple consecutive slot initial transmission resource or multiple consecutive slot retransmission resource fails, the resource reselection is not triggered, and the terminal device may continue the LBT on a subsequent resource. For example, as shown in FIG. 2, the terminal device may not trigger the resource reselection if the LBT fails on three slot resources of the first MCSt resource, and may continue to perform the LBT on three slot resources of the second MCSt. If the LBT fails on three slot resources of the second MCSt, the terminal device may continue to perform the LBT on three slot resources of the next MCSt until the first reselection condition is satisfied, for example, the number of available consecutive slots is less than or equal to the first threshold, and the terminal device triggers the resource reselection for the multiple consecutive slot transmission resource. Optionally, the "available consecutive slots" may refer to the number of remaining slots available for transmitting the TB.

As another example, as shown in FIG. 2, if the LBT failure occurs on the first slot resource in the first MCSt resource, the terminal device does not trigger the resource reselection, and the terminal device may continue to perform the LBT on the second slot resource in the first MCSt resource. If the LBT failure occurs on the second slot resource in the first MCSt resource, the terminal device continues to perform the LBT on the next slot resource until there is no available transmission resource (that is, the LBT failure occurs on all slot resources), and then the terminal device triggers the resource reselection for the multiple consecutive slot transmission resource.

In some embodiments, as shown in FIG. 3, the plurality of TBs are a plurality of different TBs, and the optional implementation of triggering the resource reselection for the multiple consecutive slot transmission resource may include: continuing to perform the LBT on the first slot resource within the next multiple consecutive slot transmission resource until the second reselection condition is satisfied, for example, the number of the available multiple consecutive slot transmission resources being less than or equal to the first threshold, or the LBT failure occurring on the first slot resource within all consecutive slot transmission resources, in which the next multiple consecutive slot transmission resource is a next multiple consecutive slot transmission resource adjacent to a previous multiple consecutive slot transmission resource on which the LBT failure occurred, for transmitting the plurality of different TBs; and triggering the resource reselection for the multiple consecutive slot transmission resource.

As an example, as shown in FIG. 3, for the multiple consecutive slot transmission resource for the plurality of different TBs, the terminal device performs the LBT on the first slot resource within the multiple consecutive slot transmission resource, and if the LBT fails, the terminal device does not trigger the resource reselection for the multiple consecutive slot transmission resource; and the terminal device may continue to perform the LBT on the first slot resource within the next multiple consecutive slot transmission resource (e.g., the first slot resource within the second MCSt resource as shown in FIG. 3) until the second reselection condition is satisfied, for example, the number of the available multiple consecutive slot transmission resources is less than or equal to the first threshold, or the LBT failure occurs on the first slot resource within all consecutive slot transmission resources, and then the terminal device triggers the resource reselection for the multiple consecutive slot transmission resource.

Optionally, the resource selection/reselection scheme 1 may be used to select the resource for the plurality of TBs. For example, the MAC layer of the terminal device submits a first parameter corresponding to each TB to a physical layer of the terminal device, in which the first parameter corresponding to each TB is used for the resource reselection for the corresponding TB; acquires, from the physical layer, a third candidate resource set corresponding to each TB, in which a resource in the third candidate resource set is a single slot resource; performs resource selection or reselection in the third candidate resource set corresponding to each TB to determine the multiple consecutive slot transmission resource for the plurality of different TBs, in which a resource selected includes an initial transmission resource and a retransmission resource of each TB.

Optionally, the resource selection/reselection scheme 3 may be used to select the resource for the plurality of TBs. For example, the MAC layer of the terminal device submits a second parameter corresponding to the plurality of TBs to the physical layer of the terminal device, in which the second parameter corresponding to the plurality of TBs is used for the resource reselection for the plurality of different TBs; acquires a fifth candidate resource set for the plurality of different TBs from a physical layer, in which a resource in the fifth candidate resource set is a multiple consecutive slot resource; and selects the multiple consecutive slot transmission resource for the plurality of different TB in the fifth candidate resource set, in which the multiple consecutive slot transmission resource selected includes a multiple consecutive slot initial transmission resource and a multiple consecutive slot retransmission resource of the plurality of different TBs.

For example, as shown in FIG. 3, if the LBT failure occurs on the first slot resource in the first MCSt resource, the terminal device does not trigger the resource reselection, and the terminal device may continue to perform the LBT on the first slot resource in the second MCSt resource. If the LBT is successful on the first slot resource in the second MCSt resource, the plurality of TBs are transmitted on the second MCSt resource. If the LBT failure occurs on the first slot resource in the second MCSt resource, the terminal device does not trigger the resource reselection when the number of subsequently available multiple consecutive slot transmission resources is greater than the first threshold, and the terminal device continues to perform the LBT on the first slot resource in the third MCSt resource until the number of subsequently available multiple consecutive slot transmission resources is less than or equal to the first threshold, the terminal device triggers the resource reselection for the multiple consecutive slot transmission resource. The "number of the multiple consecutive slot transmission resources" may be the number of the multiple consecutive slot transmission resources for transmitting the plurality of TBs, and for example, as shown in FIG. 3, the entire initial transmission resources of the four different TBs are counted as one multiple consecutive slot transmission resource, and FIG. 3 illustrates three multiple consecutive slot transmission resources. The "number of available multiple consecutive slot transmission resources" may be understood as the number of remaining multiple consecutive slot transmission resources, that is, the number of remaining multiple consecutive slot transmission resources that may be used for transmitting the plurality of TBs.

As another example, as shown in FIG. 3, if the LBT failure occurs on the first slot resource in the first MCSt resource, the terminal device does not trigger the resource reselection, and the terminal device may continue to perform the LBT on the first slot resource in the second MCSt resource. If the LBT is successful on the first slot resource in the second MCSt resource, the plurality of TBs are transmitted on the second MCSt resource. If the LBT failure occurs on the first slot resource in the second MCSt resource, the terminal device continues to perform the LBT on the first slot resource in the third MCSt resource until the LBT failure occurs on the first slot resource within all the multiple consecutive slot transmission resources, and the terminal device triggers the resource reselection for the multiple consecutive slot transmission resource.

In some embodiments, independent resource selection/reselection may be triggered for each TB of the plurality of different TBs. For example, the resource selection/reselection scheme 1 may be used to perform the resource selection/reselection for each TB to determine the multiple consecutive slot transmission resource for transmitting the plurality of different TBs, and the multiple consecutive slot transmission resource may include the multiple consecutive slot initial transmission resource and the multiple consecutive slot retransmission resource to realize the multiple consecutive slot transmission resource as shown in FIG. 3. As shown in FIG. 3, the LBT failure occurs in the first slot within the first multiple consecutive slot transmission resource (that is, the first MCSt resource), the LBT is continued in the second slot TB2 within the first MCSt resource, and if successful, TB2, TB3, and TB4 are transmitted, in which case the multiple consecutive slot transmission carries TB2, TB3, and TB4. All resources of TB1 are directly reselected, including a new transmission resource and a retransmission resource, and the first slot resource of TB1 within all subsequent multiple consecutive slot transmission resources (i.e., the second, third... n-th MCSt resources) is also directly discarded, and only TB2, TB3 and TB4 are transmitted. If the failure also occurs in the second slot (the slot corresponding to TB2) within the first MCSt resource, the third slot is tried (the slot corresponding to TB3) until the fourth slot (the slot corresponding to TB4). By way of example, the resource reselected by TB1 may be consecutive with the resource of TB2, TB3, and TB4, and the resource reselected by TB1 may also not be consecutive with the resource of TB2, TB3, and TB4. By way of example, the resource reselection of TB1 may perform an existing resource selection/reselection process. By way of example, the resource reselection of TB1 may perform the above-described resource selection/reselection scheme 1 or the above-described resource selection/reselection scheme 2 to select/reselect the resource of TB1.

In some embodiments, the resource selection/reselection may be triggered once for the plurality of different TBs. For example, the resource selection/reselection scheme 3 may be used to perform the resource selection/reselection for the plurality of different TBs to determine the multiple consecutive slot transmission resource for transmitting the plurality of different TBs, and the multiple consecutive slot transmission resource may include the multiple consecutive slot initial transmission resource and the multiple consecutive slot retransmission resource to realize the multiple consecutive slot transmission resource as shown in FIG. 3. As shown in FIG. 3, if the LBT failure occurs in the first slot within the first multiple consecutive slot transmission resource (i.e., the first MCSt resource), the LBT is continued in the second slot (the slot corresponding to TB2) within the first MCSt resource, if successful, TB2, TB3, and TB4 are transmitted. The LBT is performed on the first slot (the slot corresponding to TB1) within the second multiple consecutive slot transmission resource (i.e., the second MCSt resource), and if successful, a new transmission of TB1 and a retransmission of TB2, TB3, and TB4 are performed.

In some embodiments, as shown in FIG. 4, for the plurality of TBs, the above-described resource selection/reselection scheme 2 may be used to select the multiple consecutive slot transmission resource for the plurality of TBs. As shown in FIG. 4, the TBs transmitted on the multiple consecutive slot transmission resource have identical TBs and different TBs. For example, the first slot resource to the third slot resource in the first MCSt resource may be used for transmitting TB1, the TBs transmitted by the three consecutive slot resources are the same, and the fourth slot resource to the sixth slot resource in the first MCSt resource are used for transmitting TB2. The seventh slot resource to the ninth slot resource in the first MCSt resource are used for transmitting TB3, and the tenth slot resource to the twelfth slot resource in the first MCSt resource are used for transmitting TB4. TB1, TB2, TB3, and TB4 are distinct TBs. In this case, if the LBT fails on the first slot resource within the first MCSt resource, the LBT may be continued on the second slot within the first MCSt resource, and if the LBT fails in all slots of TB1, resource reselection is triggered, and the multiple slot resource for the plurality of TBs are reselected according to the above-described resource selection/reselection scheme 2.

In some embodiments, as shown in FIG. 4, for the plurality of TBs, the above-described resource selection/reselection scheme 2 may be used to select the multiple consecutive slot transmission resource for the plurality of TBs. As shown in FIG. 4, the TBs transmitted on the multiple consecutive slot transmission resource have identical TBs and different TBs. For example, the first slot resource to the third slot resource in the first MCSt resource may be used for transmitting TB1, the TBs transmitted by the three consecutive slot resources are the same, and the fourth slot resource to the sixth slot resource in the first MCSt resource are used for transmitting TB2. The seventh slot resource to the ninth slot resource in the first MCSt resource are used for transmitting TB3, and the tenth slot resource to the twelfth slot resource in the first MCSt resource are used for transmitting TB4. TB1, TB2, TB3, and TB4 are distinct TBs. In this case, if the LBT fails on the first slot resource within the first MCSt resource, the terminal device may continue the LBT in the second slot within the first MCSt resource, and if the LBT fails in all slots of TB1, the terminal device may perform the LBT on the first slot resource within the second MCSt resource, and so on, until the LBT fails in all slots of TB1 within the last MCSt resource or the total number of available resources (the number of remaining available MCSt resources) is less than the first threshold, the terminal device triggers the resource reselection, and the multiple slot resource for the plurality of TBs are reselected according to the above-described resource selection/reselection scheme 2.

In some embodiments, as shown in FIG. 4, for the plurality of TBs, the above-described resource selection/reselection scheme 2 may be used to select the multiple consecutive slot transmission resource for the plurality of TBs. As shown in FIG. 4, the TBs transmitted on the multiple consecutive slot transmission resource have identical TBs and different TBs. For example, the first slot resource to the third slot resource in the first MCSt resource may be used for transmitting TB1, the TBs transmitted by the three consecutive slot resources are the same, and the fourth slot resource to the sixth slot resource in the first MCSt resource are used for transmitting TB2. The seventh slot resource to the ninth slot resource in the first MCSt resource are used for transmitting TB3, and the tenth slot resource to the twelfth slot resource in the first MCSt resource are used for transmitting TB4. TB1, TB2, TB3, and TB4 are distinct TBs. In this case, if the LBT fails on the first slot resource within the first MCSt resource, the terminal device triggers the resource reselection, and the multiple slot resource for the plurality of TBs are reselected according to the above-described resource selection/reselection scheme 2.

In some embodiments, as shown in FIG. 4, if the LBT fails in the first slot within the first MCSt resource, the attempt may be continued on the second and third slots of TB1 within the first MCSt resource, if the failure occurs in all slots of TB1 within the first MCSt resource, all resources of TB1 are directly reselected, including a new transmission resource and a retransmission resource, and the slot resources corresponding to TB1 within all subsequent MCSt resources (i.e., the second, third... n-th MCSt resources) are directly discarded. The LBT may be continued in the first slot of TB2 within the first MCSt resource (the fourth slot within the first MCSt resource), and if successful, TB2, TB3, and TB4 are transmitted, in which case the multiple consecutive slot transmission carries TB2, TB3, and TB4. If the failure occurs in all slots corresponding to TB2 within the first MCSt resource, the slot corresponding to TB3 within the first MCSt resource is tried until the slot corresponding to TB4 within the first MCSt resource. By way of example, the resource reselected by TB1 may be consecutive with the resource of TB2, TB3, and TB4, and the resource reselected by TB1 may also not be consecutive with the resource of TB2, TB3, and TB4. By way of example, the resource reselection of TB1 may perform an existing resource selection/reselection process. By way of example, the resource reselection of TB1 may perform the above-described resource selection/reselection scheme 1 or the above-described resource selection/reselection scheme 2 to select/reselect the resource of TB1.

In some embodiments, as shown in FIG. 4, if the LBT failure occurs in the first slot within the first MCSt resource, the LBT is directly continued in the first slot of TB2 within the first MCSt resource (such as the fourth slot within the first MCSt resource), and if successful, TB2, TB3, and TB4 are transmitted, in which case the multiple consecutive slot transmission carries TB2, TB3, and TB4. All resources of TB1 are directly reselected, including a new transmission resource and a retransmission resource, and slot resources corresponding to TB1 within all subsequent MCSt resources (i.e., the second, third, and n-th MCSt resources) are directly discarded. The resource reselected by TB1 may be consecutive with the resource of TB2, TB3, and TB4, and the resource reselected by TB1 may also not be consecutive with the resource of TB2, TB3, and TB4. By way of example, the resource reselection of TB1 may perform an existing resource selection/reselection process. By way of example, the resource reselection of TB1 may perform the above-described resource selection/reselection scheme 1 or the above-described resource selection/reselection scheme 2 to select/reselect the resource of TB1.

In some embodiments, as shown in FIG. 4, if the LBT fails in the first slot within the first MCSt resource, the LBT is directly continued in the first slot of TB2 in the first MCSt resource (e.g., the fourth slot within the first MCSt resource), and if the LBT also fails in the first slot of TB2 within the first MCSt resource, the LBT is tried again in the first slot of TB3 within the first MCSt resource (e.g., the seventh slot within the first MCSt resource). If the LBT is successful in the first slot of TB3 within the first MCSt resource, TB3 and TB4 are transmitted. The resource reselected for TB1 and TB2 includes the new transmission resource and the retransmission resource of TB1 and the new transmission resource and the retransmission resource of TB2. By way of example, the resource reselected by TB1 may be consecutive with the resource of TB3 and TB4, and the resource reselected by TB1 may also not be consecutive with the resource of TB3 and TB4. By way of example, the resource reselection of TB1 may perform an existing resource selection/reselection process. By way of example, the resource reselection of TB1 may perform the above-described resource selection/reselection scheme 1 or the above-described resource selection/reselection scheme 2 to select/reselect the resource of TB1. By way of example, the resource reselected by TB2 may be consecutive with the resource of TB3 and TB4, and the resource reselected by TB2 may also not be consecutive with the resource of TB3 and TB4. By way of example, the resource reselection of TB2 may perform an existing resource selection/reselection process. By way of example, the resource reselection of TB2 may perform the above-described resource selection/reselection scheme 1 or the above-described resource selection/reselection scheme 2 to select/reselect the resource of TB2.

In some embodiments, the terminal device may determine the first threshold according to the implementation. In a possible implementation, the terminal device may determine the first threshold by the MAC layer of the terminal device.

In some embodiments, the first threshold may be N times the number of slots within the multiple consecutive slot transmission as an example, and N may be 0.5, or may be other numerical values greater than 0 and less than or equal to 1, which is not limited by the present disclosure. Alternatively, N may be any positive integer greater than 1.

In some embodiments, the above-described parameter of "the number of slots for the multiple consecutive slot transmission" may be determined by the terminal device according to a logical channel parameter associated with each of a plurality of TBs. Optionally, the terminal device may determine the number of slots for the multiple consecutive slot transmission according to a logical channel parameter associated with each of the plurality of TBs. In some embodiments, the logical channel parameter may include, but is not limited to, one or more of: a CAPC; logical channel priority; a PDB; or a remaining PDB.

In some embodiments, independent resource selection/reselection may be triggered for each TB, and the terminal device may determine the number of slots for the multiple consecutive slot transmission corresponding to each TB according to the logical channel parameter associated with each TB of the plurality of TBs. The number of slots for the multiple consecutive slot transmission corresponding to each TB may be identical or different. By way of example, for each TB, the MAC layer submits a parameter of the number of slots for the multiple consecutive slot transmission corresponding to the TB to the physical layer, the physical layer provides a candidate resource set for each TB, and the MAC layer selects the multiple slot resource from the candidate resource set corresponding to each TB.

In some embodiments, an optional implementation approach in which the terminal device determines the number of slots for the multiple consecutive slot transmission according to the logical channel parameter associated with each of the plurality of TBs may be as follows: determining the number of slots for the multiple consecutive slot transmission corresponding to each TB according to the CAPC associated with each TB of the plurality of TBs. By way of example, independent resource selection/reselection may be triggered for each TB, and the terminal device may determine the CAPC associated with each TB, and determine the number of slots for the multiple consecutive slot transmission corresponding to each TB according to the correspondence relationship between the preset CAPC and the number of slots. For example, the higher the CAPC associated with the TB, the larger the number of slots for the multiple consecutive slot transmission corresponding to the TB. There may be other correspondence relationships between the preset CAPC and the number of slots, which is not specifically limited by the present disclosure.

In some embodiments, an optional implementation approach in which the terminal device determines the number of slots for the multiple consecutive slot transmission according to the logical channel parameter associated with each of the plurality of TBs may be as follows: the terminal device determines the number of slots for the multiple consecutive slot transmission corresponding to each TB according to the logical channel priority associated with each TB of the plurality of TBs. By way of example, independent resource selection/reselection may be triggered for each TB, and the terminal device may determine a logical channel priority associated with each TB, and determine the number of slots for the multiple consecutive slot transmission corresponding to each TB according to a correspondence relationship between the preset logical channel priority and the number of slots. For example, the higher the logical channel priority associated with the TB, the greater the number of slots for the multiple consecutive slot transmission corresponding to the TB. There may be other correspondence relationships between the preset logical channel priority and the number of slots, which is not specifically limited by the present disclosure.

In some embodiments, an optional implementation approach in which the terminal device determines the number of slots for the multiple consecutive slot transmission according to the logical channel parameter associated with each of the plurality of TBs may be as follows: the terminal device determines the number of slots for the multiple consecutive slot transmission corresponding to each TB according to the PDB associated with each TB of the plurality of TBs. By way of example, independent resource selection/reselection may be triggered for each TB, and the terminal device may determine the PDB associated with each TB, and determine the number of slots for the multiple consecutive slot transmission corresponding to each TB according to the correspondence relationship between the preset PDB and the number of slots, for example, the larger the PDB associated with the TB, the larger the number of slots for the multiple consecutive slot transmission corresponding to the TB. There may be other correspondence relationships between the preset PDB and the number of slots, which is not specifically limited by the present disclosure.

In some embodiments, an optional implementation approach in which the terminal device determines the number of slots for the multiple consecutive slot transmission according to the logical channel parameter associated with each of the plurality of TBs may be as follows: the terminal device determines the number of slots for the multiple consecutive slot transmission corresponding to each TB according to the remaining PDB associated with each TB of the plurality of TBs. By way of example, independent resource selection/reselection may be triggered for each TB, and the terminal device may determine the remaining PDB associated with each TB, and determine the number of slots for the multiple consecutive slot transmission corresponding to each TB according to the correspondence relationship between the preset remaining PDB and the number of slots, for example, the larger the remaining PDB associated with the TB, the larger the number of slots for the multiple consecutive slot transmission corresponding to the TB. There may be other correspondence relationships between the preset remaining PDB and the number of slots, which is not specifically limited by the present disclosure.

In some embodiments, the resource selection/reselection may be triggered once for the plurality of TBs, and the terminal device may determine the number of slots for the multiple consecutive slot transmission corresponding to the plurality of TBs according to the logical channel parameter associated with each of the plurality of TBs, that is, the plurality of TBs collectively correspond to the number of slots for the same multiple consecutive slot transmission. The MAC layer submits the parameter of "the number of slots for the multiple consecutive slot transmission" to the physical layer, the physical layer provides a candidate resource set for the plurality of TBs, and the MAC layer selects the multiple slot resource from the candidate resource set, and the multiple slot resource is used for transmitting the plurality of TBs.

In some embodiments, an optional implementation approach in which the terminal device determines the number of slots for the multiple consecutive slot transmission corresponding to the plurality of TBs according to a logical channel parameter associated with each of the plurality of TBs may be as follows: the terminal device determines the target CAPC according to the CAPC associated with each of the plurality of TBs, and determines the number of slots for the multiple consecutive slot transmission corresponding to the plurality of TBs according to the target CAPC. Optionally, the terminal device determines the target CAPC according to any one of a minimum value, a maximum value, a median value, or an average value of the CAPC associated with each of the plurality of TBs. For example, the minimum value of the CAPC associated with each of the plurality of TBs, that is, the CAPC having the highest priority of the CAPC associated with each of the plurality of TBs, may be determined as the target CAPC. Alternatively, optionally, the terminal determines the target CAPC according to the CAPC associated with any one TB of the plurality of TBs. By way of example, the resource selection/reselection may be triggered once for the plurality of TBs, and the terminal device may determine the target CAPC, and determine the number of slots for the multiple consecutive slot transmission corresponding to the plurality of TBs according to the correspondence relationship between the preset CAPC and the number of slots, for example, the larger the CAPC, the larger the number of slots for the corresponding multiple consecutive slot transmission. There may be other correspondence relationships between the preset CAPC and the number of slots, which is not specifically limited by the present disclosure.

In some embodiments, an optional implementation approach in which the terminal device determines the number of slots for the multiple consecutive slot transmission corresponding to the plurality of TBs according to a logical channel parameter associated with each of the plurality of TBs may be as follows: the terminal device determines the target logical channel priority according to the logical channel priority associated with each of the plurality of TBs, and determines the number of slots for the multiple consecutive slot transmission corresponding to the plurality of TBs according to the target logical channel priority.

Optionally, the terminal device may determine the target logical channel priority according to any one of a minimum value, a maximum value, a median value, or an average value of the logical channel priority associated with each of the plurality of TBs. For example, the minimum value of the logical channel priority associated with each of the plurality of TBs, that is, the highest logical channel priority of the logical channel priority associated with each of the plurality of TBs, may be determined as the target logical channel priority. Alternatively, optionally, the terminal determines the target logical channel priority according to the logical channel priority associated with any one TB of the plurality of TBs.

By way of example, the resource selection/reselection may be triggered once for a plurality of TBs, and the terminal device may determine a target logical channel priority, and determine the number of slots for the multiple consecutive slot transmission corresponding to the plurality of TBs according to a correspondence relationship between a preset logical channel priority and the number of slots. For example, the higher the logical channel priority, the larger the number of slots for the corresponding multiple consecutive slot transmission. There may be other correspondence relationships between the preset logical channel priority and the number of slots, which is not specifically limited by the present disclosure.

In some embodiments, an optional implementation approach in which the terminal device determines the number of slots for the multiple consecutive slot transmission corresponding to the plurality of TBs according to a logical channel parameter associated with each of the plurality of TBs may be as follows: the terminal device determines the target PDB according to the PDB associated with each of the plurality of TBs, and determines the number of slots for the multiple consecutive slot transmission corresponding to the plurality of TBs according to the target PDB.

Optionally, the terminal device may determine any one of a minimum value, a maximum value, a median value, or an average value of the PDB associated with each of the plurality of TBs as the target PDB. For example, the minimum value of the PDB associated with each of the plurality of TBs, that is, the smallest PDB of the PDB associated with each of the plurality of TBs, may be determined as the target PDB. Alternatively, optionally, the terminal determines the target PDB according to the PDB associated with any one TB of the plurality of TBs.

By way of example, the resource selection/reselection may be triggered once for the plurality of TBs, and the terminal device may determine the target PDB, and determine the number of slots for the multiple consecutive slot transmission corresponding to the plurality of TBs according to the correspondence relationship between the preset PDB and the number of slots, for example, the larger the PDB, the larger the number of slots for the corresponding multiple consecutive slot transmission. There may be other correspondence relationships between the preset PDB and the number of slots, which is not specifically limited by the present disclosure.

In some embodiments, an optional implementation approach in which the terminal device determines the number of slots for the multiple consecutive slot transmission corresponding to the plurality of TBs according to logical channel parameter associated with each of the plurality of TBs may be as follows: the terminal device determines a target remaining PDB according to the remaining PDB associated with each of the plurality of TBs, and determines the number of slots for the multiple consecutive slot transmission corresponding to the plurality of TBs according to the target remaining PDB.

Optionally, the terminal device determines any one of a minimum value, a maximum value, a median value, or an average value of the remaining PDB associated with each of the plurality of TBs as the target remaining PDB. For example, the minimum value of the remaining PDB associated with each of the plurality of TBs, that is, the smallest remaining PDB of the remaining PDB associated with each of the plurality of TBs, may be determined as the target remaining PDB. Alternatively, optionally, the terminal device determines the remaining PDB associated with any one TB of the plurality of TBs as the target remaining PDB.

By way of example, the resource selection/reselection may be triggered once for a plurality of TBs, and the terminal device may determine the target remaining PDB, and determine the number of slots for the multiple consecutive slot transmission corresponding to the plurality of TBs according to the correspondence relationship between the preset remaining PDB and the number of slots, for example, the larger the remaining PDB, the larger the number of slots for the corresponding multiple consecutive slot transmission. There may be other correspondence relationships between the preset remaining PDB and the number of slots, which is not specifically limited by the present disclosure.

In embodiments of the present disclosure, some or all of the steps, optional implementations thereof, may be arbitrarily combined with some or all of the steps in other embodiments, and may be arbitrarily combined with optional implementations of other embodiments.

Embodiments of the present disclosure also provide an apparatus for implementing any of the above methods, for example, an apparatus including a unit or a module for implementing steps performed by a terminal device in any of the above methods is provided.

It should be understood that the division of various units or modules in the above apparatus is only a division of logical functions, and may be fully or partially integrated into one physical entity or may be physically separated when actually implemented. Furthermore, units or modules in the apparatus may be implemented in the form of a processor calling software: for example, the apparatus includes a processor, the processor is connected to a memory, the memory has instructions stored therein, and the processor calls the instructions stored in the memory to implement any of the above methods or to implement the functions of each unit or module of the apparatus, in which the processor is, for example, a general purpose processor, such as a central processing unit (CPU) or a microprocessor, and the memory is a memory within the apparatus or a memory outside the apparatus. Alternatively, the units or modules in the apparatus may be implemented in the form of hardware circuit, and some or all of the functions of the units or modules may be implemented by designing the hardware circuit, and the above hardware circuit may be understood as one or more processors; for example, in an implementation, the hardware circuit is an application-specific integrated circuit (ASIC), and the functions of some or all of the above units or modules are realized by designing the logical relationship of elements in the circuit; for another example, in another implementation, the hardware circuit may be implemented by a programmable logic device (PLD). Taking a field programmable gate array (FPGA) as an example, the hardware circuit can include a large number of logic gate circuits, and the connection relationship between the logic gate circuits is configured by a configuration file, realizing the functions of some or all of the above units or modules. All units or modules of the above apparatus may be implemented entirely in the form of the processor calling software, or entirely in the form of hardware circuit, or partially in the form of the processor calling software, and the rest in the form of hardware circuit.

In embodiments of the present disclosure, the processor is a circuit having signal processing capabilities, and in an implementation, the processor may be a circuit having instruction reading and running capabilities, such as a central processing unit (CPU), a microprocessor, a graphics processing unit (GPU) (which may be understood as a microprocessor), or a digital signal processor (DSP), etc.; in another implementation, the processor may implement certain functions through the logical relationship of hardware circuits that are fixed or reconfigurable, for example, the processor is a hardware circuit implemented by an application-specific integrated circuit (ASIC) or a programmable logic device (PLD), such as an FPGA. In the reconfigurable hardware circuit, the process in which the processor loads a configuration document to implement the configuration of the hardware circuit may be understood as the process in which the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

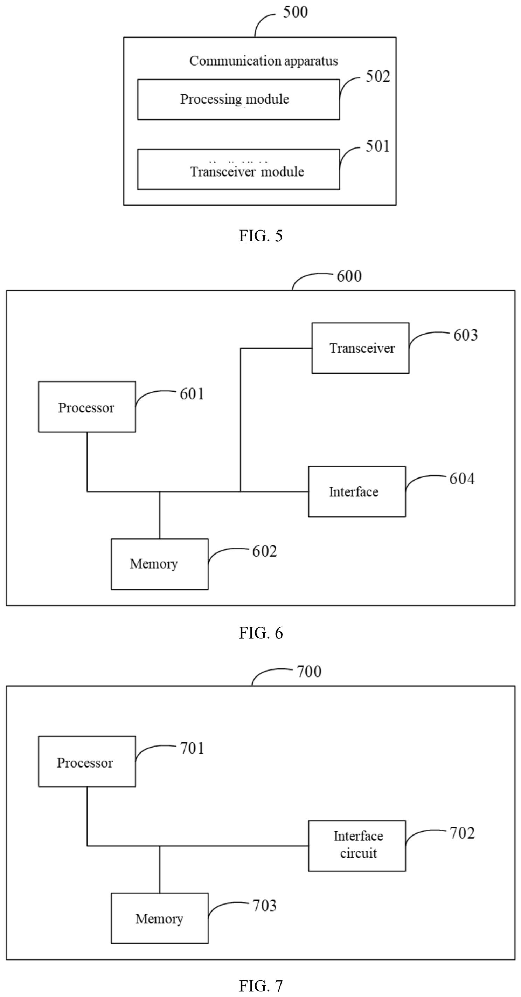

FIG. 5 is a block diagram of a communication apparatus provided by an embodiment of the present disclosure. As illustrated in FIG 5, the communication apparatus 500 may include at least one of a transceiver module 501 and a processing module 502. In some embodiments, the processing module is configured to trigger a resource reselection for a multiple consecutive slot transmission resource in response to a listen before talk (LBT) failure occurring on a first slot resource within the multiple consecutive slot transmission resource, in which the multiple consecutive slot transmission resource includes a plurality of consecutive slot resources for transmitting a plurality of transport blocks (TBs). Optionally, the transceiver module is configured to perform at least one of the communication steps such as transmission and/or reception performed by the terminal device in any of the above methods, which is not repeated here. Optionally, the processing module is configured to perform at least one of other steps (such as step 101, but not limited thereto) performed by the terminal device in any of the above methods, which is not repeated here.

FIG. 6 is a block diagram of a terminal device 600 provided by an embodiment of the present disclosure. The terminal device 600 may be a terminal (for example, a user equipment, or the like), or a chip, chip system, or processor, etc. that supports implementations of the above methods. The terminal device 600 may be used to implement the methods described in the method embodiments described above, details of which may be found in the description of the method embodiments described above.

As illustrated in FIG. 6, the terminal device 600 includes one or more processors 601. The processor 601 may be a general-purpose processor, a dedicated processor, or the like, and may be, for example, a baseband processor or a central processing unit. The baseband processor may be used to process the communication protocol as well as the communication data, and the central processor may be used to control the communication device (e.g., the base station, the baseband chip, the terminal device, the terminal device chip, the DU or the CU, etc.), execute the program, and process the data of the program. The terminal device 600 is configured to perform any of the above methods.

In some embodiments, the terminal device 600 further includes one or more memories 602 for storing instructions. Optionally, all or part of the memory 602 may also be outside the terminal device 600.

In some embodiments, the terminal device 600 further includes one or more transceivers 603. In a case where the terminal device 600 includes one or more transceivers 603, at least one of communication steps such as transmission and/or reception in above methods is performed by the transceiver 603, and at least one of other steps (such as step 101, but not limited to this) is performed by the processor 601.

In some embodiments, the transceiver may include a receiver and/or a transmitter, which may be separate or integrated together. Optionally, terms such as a transceiver, a transceiver unit, a transceiving machine, and a transceiver circuit may be mutually replaced, terms such as a transmitter, a transmitter unit, a transceiving machine, and a transmitter circuit may be mutually replaced, and terms such as a receiver, a receiving unit, a receiving machine, and a receiving circuit may be mutually replaced.

In some embodiments, the terminal device 600 may include one or more interface circuits 604. Optionally, the interface circuit 604 is connected to the memory 602, and the interface circuit 604 may be used to receive signals from the memory 602 or other devices, and may be used to transmit signals to the memory 602 or other devices. For example, the interface circuit 604 may read instructions stored in the memory 602 and transmit the instructions to the processor 601.

The terminal device 600 described in the above embodiments may be a terminal, but the scope of the terminal device 600 described in the present disclosure is not limited to this, and the structure of the terminal device 600 may not be limited by FIG. 6. The communication device may be a stand-alone device or may be part of a larger device. For example, the terminal device may be: 1) a stand-alone integrated circuit IC, or a chip, or a chip system or subsystem; (2) a set having one or more ICs, optionally, the set of ICs may also include storage components for storing data, programs; (3) an ASIC, such as a Modem; (4) modules that may be embedded in other devices; (5) receivers, terminal devices, intelligent terminal devices, cellular phones, wireless devices, handsets, mobile units, vehicle devices, network devices, cloud devices, artificial intelligence devices, etc.; (6) Others, etc.

FIG. 7 is a block diagram of a chip 700 provided by an embodiment of the present disclosure. In a case where the terminal device 600 may be a chip or a chip system, reference may be made to the schematic structural diagram of the chip 700 illustrated in FIG. 7, which is not limited to this.

The chip 700 includes one or more processors 701, and the chip 700 is configured to perform any of the above methods.

In some embodiments, the chip 700 further includes one or more interface circuits 702. Optionally, the interface circuit 702 is connected to the memory 703, the interface circuit 702 may be used to receive signals from the memory 703 or other devices, and the interface circuit 702 may be used to transmit signals to the memory 703 or other devices. For example, the interface circuit 702 may read instructions stored in the memory 703 and transmit the instructions to the processor 701.

In some embodiments, at least one of communication steps such as transmission and/or reception in above methods is performed by the interface circuit 702, and at least one of other steps (such as step 101, but not limited to this) is performed by the processor 701.

In some embodiments, terms such as interface circuit, interface, transceiver pin, transceiver, and the like may be interchanged with each other.

In some embodiments, the chip 700 further includes one or more memories 703 for storing instructions. Optionally, all or part of the memory 703 may be outside the chip 700.

The present disclosure also provides a storage medium having instructions stored thereon that, when the instructions are executed on the terminal device 600, cause the terminal device 600 to perform any of the above methods. Optionally, the storage medium is an electronic storage medium. Optionally, the storage medium is a computer-readable storage medium, but is not limited to this, and may be a storage medium readable by another device. Optionally, the storage medium may be a non-transitory storage medium, but is not limited to this, and may be a transitory storage medium.

The present disclosure also provides a program product that, when executed by the terminal device 600, causes the terminal device 600 to perform any of the above methods. Optionally, the program product is a computer program product.

The present disclosure also provides a computer program that, when run on a computer, causes the computer to perform any of the above methods.

In the above embodiments, this may be accomplished in whole or in part by software, hardware, firmware, or any combination thereof. When implemented using software, it may be implemented in whole or in part as a computer program product. The computer program product includes one or more computer programs. When loaded and executed on a computer, the computer program described herein produces, in whole or in part, a process or function in accordance with the processes described in embodiments of the present disclosure. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website site, computer, server, or data center to another website site, computer, server, or data center via wired (e.g., coaxial cable, fiber optics, digital subscriber line, DSL) or wireless (e.g., infrared, wireless, microwave, etc.) means. The computer readable storage medium may be any usable medium to which a computer has access or a data storage device such as a server, data center, etc., that contains one or more usable media integrated. The available media described may be magnetic media (e.g., floppy disk, hard disk, tape), optical media (e.g., high-density digital video disc (DVD)), or semiconductor media (e.g., solid state disk (SSD)) and the like.

A person skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A skilled person may use different methods for each particular application to implement the described functionality, but such implementations should not be considered outside the scope of the present disclosure.

It may be clearly understood by a person skilled in the art, for the convenience and brevity of the description, for the specific working processes of the above-described systems, apparatuses, and units reference may be made to the corresponding processes in the foregoing embodiments of the method, which are not repeated here.

The above-described are merely specific implementations of the present disclosure, but the protection scope of the present disclosure is not limited to this. The conceivable change or alternative by those skilled in the art within the technical scope disclosed by the present disclosure should be covered in the protection scope of the present disclosure. Therefore, the protection scope of the present disclosure is subject to the protection scope of the claims.

## Claims

1. A resource reselection method, comprising:
triggering a resource reselection for a multiple consecutive slot transmission resource in response to a listen before talk (LBT) failure occurring on a first slot resource within the multiple consecutive slot transmission resource, wherein the multiple consecutive slot transmission resource comprises a plurality of consecutive slot resources for transmitting a plurality of transport blocks (TBs).

2. The method according to claim 1, wherein triggering the resource reselection for the multiple consecutive slot transmission resource comprises at least one of:
performing the resource reselection for the multiple consecutive slot transmission resource by using a preset parameter acquired from a physical layer; or
performing the resource reselection for the multiple consecutive slot transmission resource by using a candidate resource set acquired from a physical layer, wherein the multiple consecutive slot transmission resource comprises a single slot resource or a multiple consecutive slot resource.

3. The method according to claim 1 or 2, wherein the plurality of TBs are the same TB; and triggering the resource reselection for the multiple consecutive slot transmission resource comprises at least one of:
a medium access control (MAC) layer submitting a first parameter to a physical layer, wherein the first parameter is used for the resource reselection for the multiple consecutive slot transmission resource; or
acquiring a first candidate resource set for the TB from a physical layer, wherein a resource in the first candidate resource set is a single slot resource; and selecting the multiple consecutive slot transmission resource for the TB in the first candidate resource set, wherein the multiple consecutive slot transmission resource selected comprises an initial transmission resource and a retransmission resource of the TB.

4. The method according to claim 1 or 2, wherein the plurality of TBs are the same TB; and triggering the resource reselection for the multiple consecutive slot transmission resource comprises at least one of:
an MAC layer submitting a second parameter to a physical layer, wherein the second parameter is used for the resource reselection for the multiple consecutive slot transmission resource; or
acquiring a second candidate resource set for the TB from a physical layer, wherein a resource in the second candidate resource set is a multiple consecutive slot resource; and selecting the multiple consecutive slot transmission resource for the TB in the second candidate resource set, wherein the multiple consecutive slot transmission resource selected comprises a multiple consecutive slot initial transmission resource and a multiple consecutive slot retransmission resource of the TB.

5. The method according to claim 1, wherein triggering the resource reselection for the multiple consecutive slot transmission resource comprises:
triggering the resource reselection for the multiple consecutive slot transmission resource in response to satisfying a first reselection condition after the LBT failure occurs on the first slot resource; or
continuing to perform LBT on other slot resources in response to not satisfying the first reselection condition after the LBT failure occurs on the first slot resource.

6. The method according to claim 5, further comprising:
performing the LBT on the other slot resources within the multiple consecutive slot transmission resource according to a first order, and in response to satisfying the first reselection condition, triggering the resource reselection for the multiple consecutive slot transmission resource.

7. The method according to claim 1, 5, or 6, wherein the plurality of TBs are the same TB; and triggering the resource reselection for the multiple consecutive slot transmission resource comprises:
after the LBT failure occurs on the first slot resource,
triggering the resource reselection for the multiple consecutive slot transmission resource in response to satisfying a first reselection condition; or
continuing to perform the LBT on a second slot resource within the multiple consecutive slot transmission resource in response to not satisfying a first reselection condition, and determining whether to trigger the resource reselection for the multiple consecutive slot transmission resource according to a result of the LBT on the second slot resource and the first reselection condition.

8. The method according to claim 7, wherein determining whether to trigger the resource reselection for the multiple consecutive slot transmission resource according to the result of the LBT on the second slot resource comprises:
in response to the LBT failure occurring on the second slot resource, continuing to perform the LBT on a next slot resource, wherein the next slot resource is a slot resource adjacent to a previous slot resource on which the LBT failure occurred within the multiple consecutive slot transmission resource; and
triggering the resource reselection for the multiple consecutive slot transmission resource in response to satisfying the first reselection condition.

9. The method according to any one of claims 1 to 8, wherein the plurality of TBs are a plurality of identical TBs; and triggering the resource reselection for the multiple consecutive slot transmission resource comprises:
continuing to perform the LBT on a next slot resource until a first reselection condition is satisfied, wherein the next slot resource is a slot resource adjacent to a previous slot resource on which the LBT failure occurred within the multiple consecutive slot transmission resource; and
triggering the resource reselection for the multiple consecutive slot transmission resource.

10. The method according to any one of claims 3 to 9, wherein the first reselection condition comprises a number of available consecutive slots within the multiple consecutive slot transmission resource is less than or equal to a first threshold, or the LBT failure occurs on all slot resources within the multiple consecutive slot transmission resource.

11. The method according to claim 1 or 2, wherein the plurality of TBs are a plurality of different TBs; and triggering the resource reselection for the multiple consecutive slot transmission resource comprises:
for each of the plurality of different TBs, triggering the resource reselection for the multiple consecutive slot transmission resource.

12. The method according to claim 1, 2, or 11, wherein for each of the plurality of different TBs, triggering the resource reselection for the multiple consecutive slot transmission resource comprises at least one of:
an MAC layer submitting a first parameter corresponding to each TB to a physical layer, wherein the first parameter corresponding to each TB is used for the resource reselection for the corresponding TB;
acquiring, from the physical layer, a third candidate resource set corresponding to each TB, wherein a resource in the third candidate resource set is a single slot resource; or
performing resource selection or reselection in the third candidate resource set corresponding to each TB to determine the multiple consecutive slot transmission resource for the plurality of different TBs, wherein a resource selected comprises an initial transmission resource and a retransmission resource of each TB.

13. The method according to claim 1, 2, or 11, wherein for each of the plurality of different TBs, triggering the resource reselection for the multiple consecutive slot transmission resource comprises at least one of:
an MAC layer submitting a second parameter corresponding to each TB to a physical layer, wherein the second parameter corresponding to each TB is used for the resource reselection for the corresponding TB;
acquiring, from the physical layer, a fourth candidate resource set corresponding to each TB, wherein a resource in the fourth candidate resource set is a multiple consecutive slot resource; or
performing resource selection or reselection in the fourth candidate resource set corresponding to each TB to determine the multiple consecutive slot transmission resource for the plurality of different TBs, wherein a resource selected comprises a multiple consecutive slot initial transmission resource and a multiple consecutive slot retransmission resource of each TB.

14. The method according to claim 1, 5, or 6, wherein the plurality of TBs are a plurality of different TBs; and triggering the resource reselection for the multiple consecutive slot transmission resource comprises at least one of:
an MAC layer submitting a second parameter corresponding to the plurality of TBs to a physical layer, wherein the second parameter corresponding to the plurality of TBs is used for the resource reselection for the plurality of different TBs;
acquiring, from the physical layer, a fifth candidate resource set corresponding to the plurality of different TBs, wherein a resource in the fifth candidate resource set is a multiple consecutive slot resource; or
selecting the multiple consecutive slot transmission resource for the plurality of different TBs in the fifth candidate resource set, wherein the multiple consecutive slot transmission resource selected comprises a multiple consecutive slot initial transmission resource and a multiple consecutive slot retransmission resource of the plurality of different TBs.

15. The method according to claim 1, 5, or 6, wherein the plurality of TBs are a plurality of different TBs; and triggering the resource reselection for the multiple consecutive slot transmission resource comprises:
continuing to perform the LBT on a first slot resource within a next multiple consecutive slot transmission resource, wherein the next multiple consecutive slot transmission resource is a next multiple consecutive slot transmission resource adjacent to a previous multiple consecutive slot transmission resource on which the LBT failure occurred, for transmitting the plurality of different TBs; and
triggering the resource reselection for the multiple consecutive slot transmission resource in response to satisfying a second reselection condition.

16. The method according to any one of claims 12 to 15, wherein a second reselection condition comprises a number of available multiple consecutive slot transmission resources being less than or equal to a first threshold, or the LBT failure occurring on the first slot resource within all multiple consecutive slot transmission resources.

17. The method according to claim 3 or 12, wherein the first parameter comprises at least one of:
a remaining packet delay budget (PDB);
a number of subchannels *L*_{subCH} for a physical sidelink shared channel (PSSCH) transmission in one subframe;
a resource reservation interval *P*_{rsvp_TX} for a PSSCH transmission; or
priority information *prio_{TX}* for a PSSCH transmission.

18. The method according to claim 4, 13, or 14, wherein the second parameter comprises at least one of:
a remaining PDB;
a number of subchannels *L*_{subCH} for a PSSCH transmission in one subframe;
a resource reservation interval *P*_{rsvp_TX} for a PSSCH transmission;
priority information *prio_{TX}* of a PSSCH transmission; or
a number of slots for a multiple consecutive slot transmission.

19. The method according to claim 10 or 16, further comprising:
determining the first threshold by the MAC layer.

20. The method according to claim 19, wherein the first threshold is N times a number of slots for a multiple consecutive slot transmission.

21. The method according to claim 17 or 20, further comprising:
determining a number of slots for a multiple consecutive slot transmission according to a logical channel parameter associated with each of the plurality of TBs.

22. The method according to claim 21, wherein the logical channel parameter comprises at least one of:
a channel access priority class (CAPC);
a logical channel priority;
a PDB; or
a remaining PDB.

23. The method according to claim 21 or 22, wherein determining the number of slots for the multiple consecutive slot transmission according to the logical channel parameter associated with each of the plurality of TBs comprises:
determining the number of slots for the multiple consecutive slot transmission corresponding to the plurality of TBs according to a CAPC associated with each of the plurality of TBs.

24. The method according to claim 23, wherein determining the number of slots for multiple consecutive slot transmission corresponding to the plurality of TBs according to the CAPC associated with each of the plurality of TBs comprises:
determining a target CAPC according to the CAPC associated with each of the plurality of TBs; and
determining the number of slots for the multiple consecutive slot transmission corresponding to the plurality of TBs according to the target CAPC.

25. The method according to claim 24, wherein determining the target CAPC according to the CAPC associated with each of the plurality of TBs comprises one of:
determining the target CAPC according to any one of a minimum value, a maximum value, a median value, or an average value of the CAPC associated with each of the plurality of TBs; or
determining the target CAPC according to the CAPC associated with any one TB of the plurality of TBs.

26. The method according to any one of claims 21 to 25, wherein determining the number of slots for the multiple consecutive slot transmission according to the logical channel parameter associated with each of the plurality of TBs comprises:
determining the number of slots for the multiple consecutive slot transmission corresponding to the plurality of TBs according to a logical channel priority associated with each of the plurality of TBs.

27. The method according to claim 26, wherein determining the number of slots for the multiple consecutive slot transmission corresponding to the plurality of TBs according to the logical channel priority associated with each of the plurality of TBs comprises:
determining the logical channel priority associated with the plurality of TBs according to any one of a minimum value, a maximum value, a median value, or an average value of the logical channel priority of a sidelink logical channel (SL LCH) and/or a sidelink medium access control control element (SL MAC CE) contained in each TB of the plurality of TBs;
determining a target the logical channel priority according to the logical channel priority associated with the plurality of TBs; and
determining the number of slots for the multiple consecutive slot transmission corresponding to the plurality of TBs according to the target logical channel priority.

28. The method according to claim 26, wherein determining the target logical channel priority according to the logical channel priority associated with each of the plurality of TBs comprises one of:
determining the target logical channel priority according to any one of a minimum value, a maximum value, a median value, or an average value of the logical channel priority associated with each of the plurality of TBs; or
determining the target logical channel priority according to the logical channel priority associated with any one TB of the plurality of TBs.

29. The method according to any one of claims 21 to 28, wherein determining the number of slots for the multiple consecutive slot transmission according to the logical channel parameter associated with each of the plurality of TBs comprises:
determining the number of slots for the multiple consecutive slot transmission corresponding to the plurality of TBs according to a PDB associated with each of the plurality of TBs.

30. The method according to claim 29, wherein determining the number of slots for multiple consecutive slot transmission corresponding to the plurality of TBs according to the PDB associated with each of the plurality of TBs comprises:
determining the PDB associated with each of the plurality of TBs according to any one of a minimum value, a maximum value, a median value, or an average value of the PDB of an SL LCH and/or an SL MAC CE contained in each TB of the plurality of TBs;
determining a target PDB according to the PDB associated with each of the plurality of TBs; and
determining the number of slots for the multiple consecutive slot transmission corresponding to the plurality of TBs according to the target PDB.

31. The method according to claim 30, wherein determining the target PDB according to the PDB associated with each of the plurality of TBs comprises one of:
determining the target PDB according to any one of a minimum value, a maximum value, a median value, or an average value of the PDB associated with each of the plurality of TBs; or
determining the target PDB according to the PDB associated with any one TB of the plurality of TBs.

32. The method according to any one of claims 21 to 31, wherein determining the number of slots for the multiple consecutive slot transmission according to the logical channel parameter associated with each of the plurality of TBs comprises:
determining the number of slots for the multiple consecutive slot transmission corresponding to the plurality of TBs according to a remaining PDB associated with each of the plurality of TBs.

33. The method according to claim 32, wherein determining the number of slots for the multiple consecutive slot transmission corresponding to the plurality of TBs according to the remaining PDB associated with each of the plurality of TBs comprises:
determining the remaining PDB associated with each of the plurality of TBs according to any one of a minimum value, a maximum value, a median value, or an average value of the remaining PDB of an SL LCH and/or an SL MAC CE contained in each TB of the plurality of TBs;
determining a target remaining PDB according to the remaining PDB associated with each of the plurality of TBs; and
determining the number of slots for the multiple consecutive slot transmission corresponding to the plurality of TBs according to the target remaining PDB.

34. The method according to claim 33, wherein determining the target remaining PDB according to the remaining PDB associated with each of the plurality of TBs comprises one of:
determining the target remaining PDB according to any one of a minimum value, a maximum value, a median value, or an average value of the remaining PDB associated with each of the plurality of TBs; or
determining the target remaining PDB according to the remaining PDB associated with any one TB of the plurality of TBs.

35. A resource reselection apparatus, comprising:
a processing module configured to trigger a resource reselection for a multiple consecutive slot transmission resource in response to a listen before talk (LBT) failure occurring on a first slot resource within the multiple consecutive slot transmission resource, wherein the multiple consecutive slot transmission resource comprises a plurality of consecutive slot resources for transmitting a plurality of transport blocks (TBs).

36. A terminal device, comprising:
one or more processors,
wherein the processor is configured to invoke instructions to cause the terminal device to perform the resource reselection method according to any one of claims 1 to 34.

37. A storage medium storing instructions that, when executed by a terminal device, cause the terminal device to perform the resource reselection method according to any one of claims 1 to 34.
